(19) Europäisches Patentamt
European Patent Office
Office européen des brevets

(11) **EP 4 271 087 A1**

(12) **EUROPEAN PATENT APPLICATION**

(43) Date of publication:
**01.11.2023 Bulletin 2023/44**

(21) Application number: **22169833.5**

(22) Date of filing: **25.04.2022**

(51) International Patent Classification (IPC):
*H04W 72/04* (2023.01)    *H04L 5/00* (2006.01)
*H04W 24/10* (2009.01)    *H04W 52/02* (2009.01)
*H04W 72/12* (2023.01)    *H04W 74/08* (2009.01)
*H04L 47/28* (2022.01)    *H04W 72/08* (2009.01)

(52) Cooperative Patent Classification (CPC):
**H04L 5/0053; H04L 5/0005; H04L 5/0094;**
**H04L 47/28; H04W 72/23;** H04L 5/001;
H04W 52/0216; H04W 52/0254; H04W 72/543;
H04W 74/0833; H04W 76/15; H04W 76/27;
H04W 76/28

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Panasonic Intellectual Property**
**Corporation**
**of America**
**Torrance, CA 90504 (US)**

(72) Inventors:
• **SHARIATMADARI, Hamidreza**
  **63225 Langen (DE)**
• **SUZUKI, Hidetoshi**
  **Osaka, 571-8501 (JP)**

(74) Representative: **Grünecker Patent- und**
**Rechtsanwälte**
**PartG mbB**
**Leopoldstraße 4**
**80802 München (DE)**

(54) **USER EQUIPMENT, SCHEDULING NODE, METHOD FOR USER EQUIPMENT, AND METHOD FOR SCHEDULING NODE**

(57)    Some exemplary embodiments relate to a communication device, a base station and respective methods for a communication device and a base station. For example, the communication device is a user equipment, UE, comprising a circuitry and a transceiver. The circuitry may be configured to (a) obtain, from a control signaling, an indication indicating a plurality of transmission times, (b) obtain an indication of an occurrence frequency of periodic traffic, and (c) determine, based on the control signalling and the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency. The transceiver may be configured to receive the control signaling, and to transmit or receive, using one of the transmission opportunities, a transmission of the periodic traffic.

**Fig. 14**

```
UE                                      BS

                          S1400: obtaining indication of the
                          occurrence frequency of periodic
                          traffic

S1440: receive control signalling         S1410: determine adapted
                                          transmission times of
                                          transmission opportunities

S1450: obtain indication of
transmission times                        S1420: generate signalling
                                          indicating transmission times

S1460: obtain indication of the
occurrence frequency of periodic          S1430: transmits the control
traffic                                   signalling

S1470: determine adapted                  S1490: transmit/receive the
transmission times of transmission        periodic traffic using a
opportunities                             transmission opportunity

S1480: transmit/receive the periodic
traffic using a transmission opportunity

UE              Channel              BS
```

EP 4 271 087 A1

**Description**

**BACKGROUND**

*1. Technical field*

The present disclosure relates to transmission and reception of signals in communication systems, such as 3GPP communication systems. In particular, the present disclosure relates to methods and apparatuses for such transmission and reception.

*2. Description of the Related Art*

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

**SUMMARY**

One non-limiting and exemplary embodiment facilitates increasing the efficiency of resource usage, in particular in scenarios with periodic traffic.

In an embodiment, the techniques disclosed here feature an apparatus (e.g. a user equipment, UE). The apparatus comprises a transceiver and a circuitry. The circuitry, in operation: (a) obtains, from a control signaling, an indication indicating a plurality of transmission times, (b) obtains an indication of an occurrence frequency of periodic traffic, and (c) determines, based on the control signalling and the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency. The transceiver, in operation receives the control signaling, and transmits or receives, using one of the transmission opportunities, a transmission of the periodic traffic.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

**Fig. 1**    shows an exemplary architecture for a 3GPP NR system;

**Fig. 2**    is a schematic drawing that shows a functional split between NG-RAN and 5GC;

**Fig. 3**    is a sequence diagram for RRC connection setup/reconfiguration procedures;

**Fig. 4**    is a schematic drawing showing usage scenarios of Enhanced mobile broadband (eMBB), Massive Machine Type Communications (mMTC) and Ultra Reliable and Low Latency Communications (URLLC);

**Fig. 5**    is a block diagram showing an exemplary 5G system architecture for a nonroaming;

**Fig. 6**    illustrates the relationship between Bandwidth Parts, Control Resource Sets (CORESETS), search spaces, search space sets, and PDCCH candidates,

Fig. 7    illustrates an exemplary time-domain structure in a communication system, such as 5G NR, including radio frames, subframes, slots, and OFDM symbols for different subcarrier spacings,

Fig. 8    illustrates signalling overhead in case of using scheduling request by the UE for dynamic scheduling of uplink resources for transmitting XR traffic;

Fig. 9    illustrates over-provision of CG uplink resources to a UE transmitting XR traffic;

Fig. 10   illustrates over-provision of SPS downlink resources to a UE receiving XR traffic;

Fig. 11   is a block diagram of a communication system including a user equipment and a base station with their respective exemplary functional structure;

Fig. 12   is a block diagram illustrating an exemplary functional structure of the processing circuitry at the user equipment side;

Fig. 13   is a block diagram illustrating an exemplary functional structure of the processing circuitry at the base station side;

Fig. 14   is a flow chart illustrating exemplary steps performed by a network node as well as exemplary steps performed by a user equipment;

Fig. 15   illustrates usage of a matching method (in this example a ceiling function with a granularity of 1 ms) to determine the transmission times of the transmission opportunities from non-integer periodic resources (indicated transmission times);

Fig. 16   illustrates usage of a virtual enable/disable cycle to determine the transmission times of the transmission opportunities from integer periodic resources (indicated transmission times); and

Fig. 17   illustrates usage of a timer and a time offset to determine the transmission times of the transmission opportunities from integer periodic resources (indicated transmission times).

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

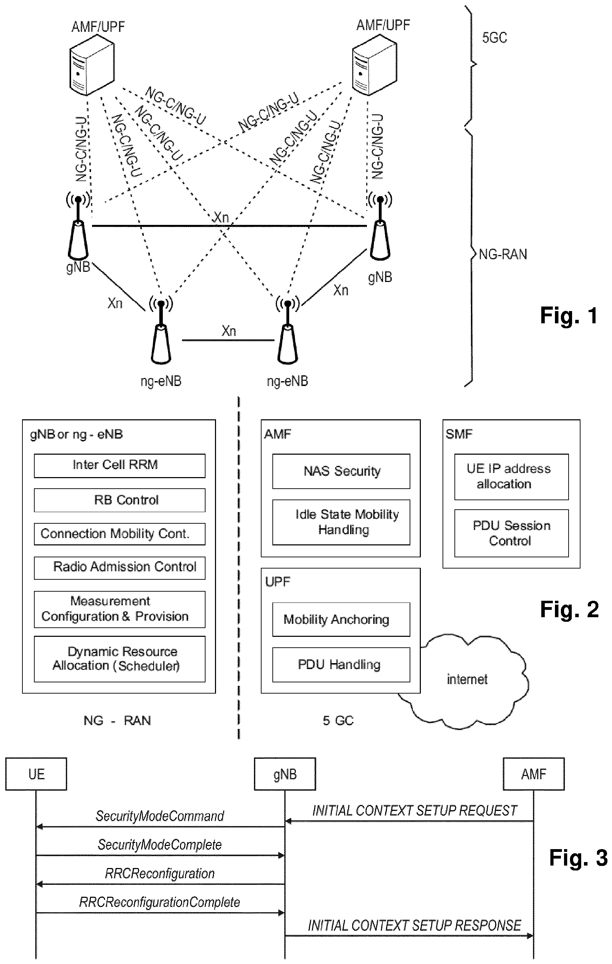

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability ($1-10^{-5}$ within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10 ms duration, each frame consisting of ten subframes of respectively 1 ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter $\mu$ (in LTE there is only a 15 kHz subcarrier spacing, corresponding to $\mu$ = 0 in NR). The types NR numerology is summarized in 3GPP TS 38.211, v 15.7.0.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;

- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

Fig. 3 illustrates some interactions between a UE, gNB, and AMF (a 5GC entity) in the context of a transition of the UE from RRC_IDLE to RRC_CONNECTED for the NAS part (see e.g. TS 38.300 v15.6.0).
RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*Usage Scenarios of IMT for 2020 and beyond*

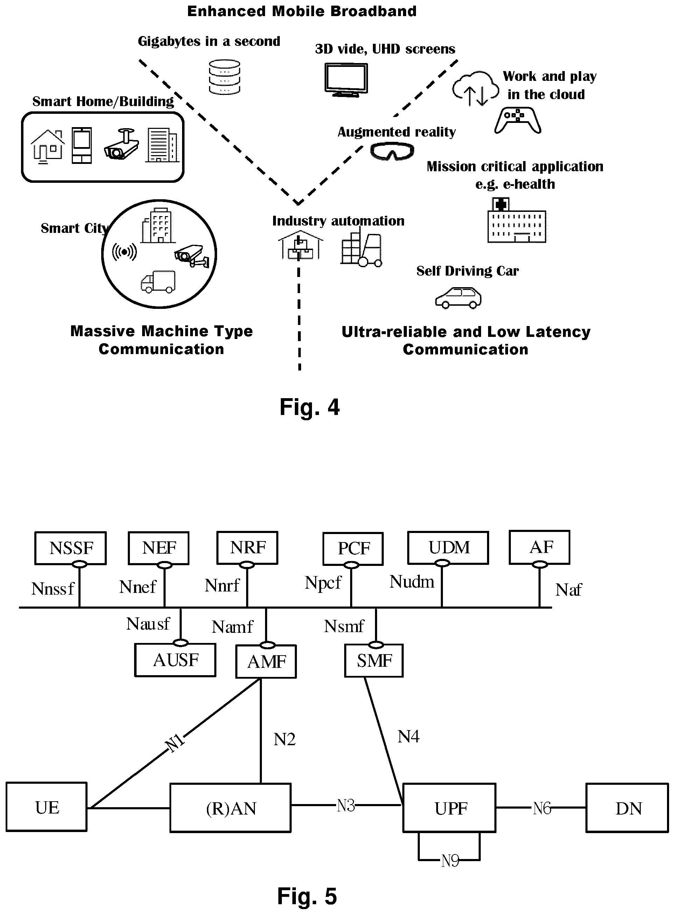

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^{-6}$ level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

*Uplink/Downlink/Sidelink*

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

*Data Channels/Control Channels*

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

*Reference Signals*

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

*Time Intervals*

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

*Frequency Bands*

The present disclosure may be applied to any of a licensed band and an unlicensed band.

*Communication*

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

*Antenna Ports*

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

*Downlink control channel monitoring, PDCCH, DCI*

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:

- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

*Physical Resource Block*

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

*Bandwidth Parts - BWPs*

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v16.6.0.

Switching between configured BWPs may be achieved in different ways. Operation of Bandwidth parts in uplink and downlink is e.g. defined in a 5G NR compliant implementation in 3GPP 38.321 e.g. v16.8.0 section 5.15. BWPs can be switched for instance by means of downlink control information (DCIs) (e.g. using a Bandwidth part indicator in DCI format 0_1 (UL grant) and DCI format 1_1 (DL schedule)), using the bwp-inactivity Timer, using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

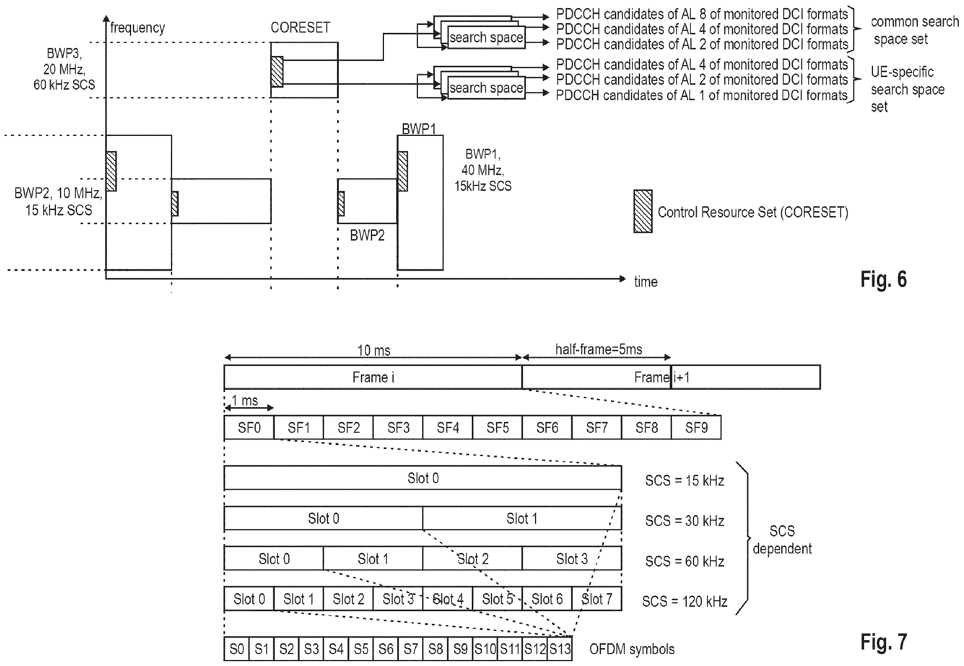

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

According to one exemplary 5G NR compatible implementation in line with 3GPP 38.331 e.g. v16.8.0, different RRCReconfiguration information elements can be used.

*Control Signals*

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

*Control information - Search space sets*

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| DCI format | Usage |
|---|---|
| 0_0 | Scheduling of PUSCH in one cell |
| 0_1 | Scheduling of PUSCH in one cell |
| 0_2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Cancel UL transmission |
| 2_5 | Notify availability of soft resources |
| 2_6 | Notify power saving information |
| 3_0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:

- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG

- a Type0A-PDCCH CSS set configured by *searchSpaceOtherSystemInformation* in *PDCCH-ConfigCommon* for a DCI format with CRC scrambled by a SI-RNTI on the primary cell of the MCG

- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell

- a Type2-PDCCH CSS set configured by *pagingSearchSpace* in *PDCCH-ConfigCommon* for a DCI format with CRC scrambled by a P-RNTI on the primary cell of the MCG

- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and

- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, Fig. 6 provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

*Time-domain in 5G NR*

In the time domain, transmissions in 5G NR are organized into frames of length 10 ms, each of which is divided into 10 equally sized subframes of length 1 ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7.**

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table).

*Uplink Control Information in 5G NR and Scheduling Requests (SRs)*

Whereas Downlink Control Information is carried by the PDCCH (see above explanation), Uplink Control Information (UCI) can be transmitted on the PUCCH or the PUSCH depending on the situation. Uplink control information can be the channel state information (CSI), the ACK/NACK information and scheduling requests. Not all of these need be carried by a single PUCCH transmission. For instance, the CSI may be carried alone, or the ACK/NACK may be carried alone, or the SR may be carried alone, or the CSI and ACK/NACK are transmitted together in a PUCCH etc.

There are a plurality of different PUCCH formats that can be used for transmitting the UCI, presently there are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used, as exemplary illustrated in the following table (see e.g. 3GPP TS 38.211 e.g. v17.1.0, section 6.3.2).

The UCI can be transmitted on the PUCCH flexibly in the time and frequency domain using specifically assigned radio resources, e.g. PUCCH resource sets. A UE can be configured with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH -Config information element (see e.g. 3GPP TS 38.331 e.g. v16.7.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1.

The current reporting of the UCI in the PUCCH is defined in 3GPP TS 38.213 e.g. v17.1.0, section 9.2.

A PUCCH resource may include one or more of the following parameters:

- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. v17.1.0, section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the SchedulingRequestConfig information element and the SchedulingRequestResourceConfig information element (see e.g. 3GPP TS 38.331 v16.7.0, such as section 6.3.2).

In brief, the scheduling request is basically a flag raised by the user equipment to request uplink resources from the uplink scheduler at the base station. Since the device requesting the resources has no PUSCH resource available, the scheduling request is transmitted on the PUCCH using the preconfigured and periodically reoccurring PUCCH resources dedicated to the UE. The serving base station can then assign radio resources to the user equipment.

Unlike LTE, 5G NR supports configuration of multiple scheduling requests from a single device. A logical channel can be mapped to zero or more scheduling request configurations. This provides the gNB not only with information that there is data awaiting for transmission in the device, but also what type of data is awaiting for transmission. This can be useful information for the gNB to consider the various traffic types 5G NR is designed to support. For example, the gNB may want to schedule a user equipment for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, i.e. in the case of multiple logical channels having data to transmit, one exemplary behavior is to trigger the scheduling request corresponding to the highest-priority logical channel. It can only request in repeated and subsequent resources, up to a configurable limit, until a grant is received from gNB. It is also possible to configure a Prohibit timer, controlling how often a scheduling request can be transmitted. In the case of multiple scheduling request resources, both of these configurations are done as per scheduling request resource.

*Semi-persistent scheduling SPS in downlink and Configured grant* (CG) *in uplink*

In the downlink, the gNB can dynamically allocate resources to UEs via the C-RNTI on PDCCH(s) (see e.g. DCIs above). Similarly, in the uplink, the gNB can dynamically allocate resources to UEs via the C-RNTI on PDCCH(s) (see e.g. DCIs above). In addition to dynamically allocating downlink resources and uplink resources, 5G NR also provides scheduling enhancements according to which resource allocation can be implemented in 5G NR based on semi-persistent scheduling (SPS) in the downlink and based on a configured grant (CG) in the uplink.

In the downlink, semi-persistent-scheduling (SPS) functionality was adopted in 5G NR as a further development of SPS as used for the previous communication system of LTE, in which it is applicable for both uplink and downlink. Furthermore, in LTE, the SPS configuration is typically dedicated to a single device. If the device does not need the allocated periodic resources (e.g. data is only transmitted for specific events, such as a collision warning), the SPS resources that are no used by the UE are wasted.

According to one 5G NR compliant example implementation, the RRC defines the relevant parameters for SPS. An RRC information element SPS-Config is defined in 3GPP 38.331 e.g. V16.7.0 for configuring the downlink semi-persistent transmission. For instance, the RRC defines the periodicity of the configured downlink assignments, the number of HARQ processes, MCS, etc.

Different periodicities are supported for DL SPS, e.g. common for all Subcarrier Spacings (SCS) or depending on the Subcarrier spacings. One example of the currently defined periodicities in TS 38.331, when being dependent on SCS, are presented in the following:

- For SCS of 15 KHz: {1, 2, 3..., 640} ms
- For SCS of 30 KHz: $0.5 \times$ {1, 2, 3..., 1280} ms
- For SCS of 60 KHz: $0.25 \times$ {1, 2, 3..., 2560} ms
- For SCS of 120 KHz: $0.125 \times$ {1, 2, 3..., 5120} ms

The UE may be configured with several (e.g. up to 8) active configured downlink assignments for one BWP of a serving cell. When more than one is configured:

- The network decides which of these configured downlink assignments are active at a time (including all of them); and
- Each configured downlink assignment is activated separately using a DCI command, and deactivation of configured downlink assignments is done using a DCI command, which can either deactivate a single configured downlink assignment or multiple configured downlink assignments jointly.

A PDCCH addressed to the CS-RNTI can either signal and activate the configured downlink assignments, while a PDCCH addressed to CS-RNTI can indicate that the downlink assignment can be implicitly reused according to the periodicity defined by RRC, until deactivated. When required, retransmissions are e.g. explicitly scheduled on PDCCH(s). SPS is particularly useful for periodic downlink data transmissions such as Voice over IP (VoIP) services. A base station configures the SPS radio resources, and the UE can use these periodic radio resources, without an additional scheduling request procedure.

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station. This can be implemented by so-called configured grants (CG).

In addition, by using configured grants, multiple devices (UEs) may be allowed to share periodic radio resources (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 and Release 17, namely Type 1 and Type 2 (see 3GPP 38.300 e.g.v16.8.0: "NR; NR and NG-RAN Overall Description; Stage 2 (Release 16)", section 10.3). According to this exemplary implementation of 3GPP TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called ConfiguredGrantConfig. (see 3GPP TS 38.331 v16.7.0, section 6.3.2 "Radio resource control information elements").

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

Retransmissions other than repetitions are explicitly allocated via PDCCH(s) or via configuration of a retransmission timer.

Different periodicities are supported for UL CG, which may depend on the Subcarrier spacings. One example of the currently defined periodicities in TS 38.331, when being dependent on SCS, are presented in the following:

- For SCS of 15 KHz: Multiple of 1 ms up to 640 ms, or multiple of 2 symbols (1/7 ms), or multiple of 7 symbols (0,5 ms)
- For SCS of 30 KHz: Multiple of 1/2 ms up to 640 ms, or multiple of 2 symbols (1/14 ms), or multiple of 7 symbols (0,25 ms)

*XR - eXtended Reality in Rel. 18*

A 3GPP study item relates to eXtended Reality (XR) in RAN 1 and RAN 2. The aim is to provide efficient communications for augmented reality (AR), virtual reality (VR), mixed reality (MR) and cloud gamin. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB). Furthermore, some of the XR applications run on devices with a limited source of energy, such as wearable glasses or handheld devices. Thus, energy efficiency is an important concern.

The XR applications impose a variety of data traffics, including video streams. The video frames are quite large with varying sizes. They are characterized as quasi-periodic, because video frames arrive over a time window. In addition, the periodicity of the time window is non-integer regarding radio frame/slot/symbols.

- Packet size: For a high-quality video stream, the frame size would be around 1M bits after compression for an 8K video. This leads having large size packets.
- Varying size: The frame sizes could vary due to the I-frame or P-frame/B-frame.
- Periodicities: A video stream generally generates 60/90/120 FPS, which correspond to the periodicity of 16.667, 11.111, and 8.333 ms, respectively.
- Jitter: The frame packets would arrive at the gNB/UE over a time window of [-4, 4] ms or even a larger time window.
- Delay budget: The delay budget for delivering the XR packets could be tight, for instance, 10 ms for AR/VR and 15 ms for cloud gaming.

*UE power saving enhancements for NR*

User experience is key to 5G/NR success, not only in terms of experienced data rates and latency but also importantly UE power consumption. UE Power saving enhancements are therefore vital to the success of 5G/NR. In Rel-16, several useful power saving schemes were specified, including power saving signal/DCI as enhancement to connected-mode DRX (cDRX), additional adaptations to maximum MIMO layer number, SCell dormancy behaviour and cross-slot scheduling as enhancements to BWP framework, RRM relaxation as enhancements for idle/inactive-mode power consumption, and UE assistance information.

In Rel-17, additional enhancements are required to address outstanding issues in Rel-16, including idle/inactive-mode power consumption in NR SA deployments, considering both eMBB UEs and Reduced Capability NR Devices, connected-mode power consumption with FR2 deployments, etc. One particular example is to study and specify extension(s) to Rel-16 DCI-based power saving adaptation during DRX Active Time for an active BWP, including PDCCH monitoring reduction when C-DRX is configured (RAN1).

Another power saving study item relates to XR-specific Power Saving in RAN 1 and RAN 2. In particular, power saving techniques are studied for XR (eXtended Reality), e.g. to accommodate XR service characteristics, such as periodicity, multiple flows, jitter, latency, reliability, etc. One technique could relate to enhancing PDCCH monitoring. A further study item relating to XR refers to XR-specific capacity improvements in RAN 1 and RAN 2, and involve studying mechanisms that provide more efficient resource allocation and scheduling for XR service characteristics, such as periodicity, multiple flows, jitter, latency, reliability, etc. Techniques could relate to SPS and CG enhancements and Dynamic scheduling/grant enhancements.

Energy saving can be implemented for the UE, including mechanisms for:

- a UE-specific BWP adaptation and use of a dormancy SCell (using DCI format 0_1 (for UL) and DCI format 1_1 (for DL),
- a UE or UE-group specific time domain adaptation by DRX and using the DCI format 2_6
- a UE-group-specific CSI-RS / TRS availability indication for IDLE/INACTIVE UEs by DCI format 2_7 and paging
- DCI-based PDCCH monitoring adaptation by PDCCH skipping and SSSG (Search Space Set Group) switching

*Further Improvements*

In the above, the study item for XR was briefly presented. However, the current 5G NR releases cannot efficiently support the XR traffics, especially video streams. This is e.g. due to the non-integer periodicity of the video packets, the varying arrival of packets, and the large and varying packet sizes.

The UE might use dynamic scheduling for XR traffics. In one example for the uplink, this would first involve the transmission of a scheduling request from the UE to the base station for requesting uplink resources. The base station could then transmit a dynamic uplink grant to the UE, to be used for the transmission of uplink XR traffic. In the downlink, the base station could transmit a downlink resource assignment on a suitable downlink control channel (such as the PDCCH), indicating the downlink resources that the base station will use for transmitting the downlink XR traffic. Therefore, using dynamic scheduling for XR traffics increases the signaling overhead and imposes that the UE must monitor PDCCH occasions frequently, resulting in high power consumption at the UE. It also increases network power consumption for PDCCH transmissions.

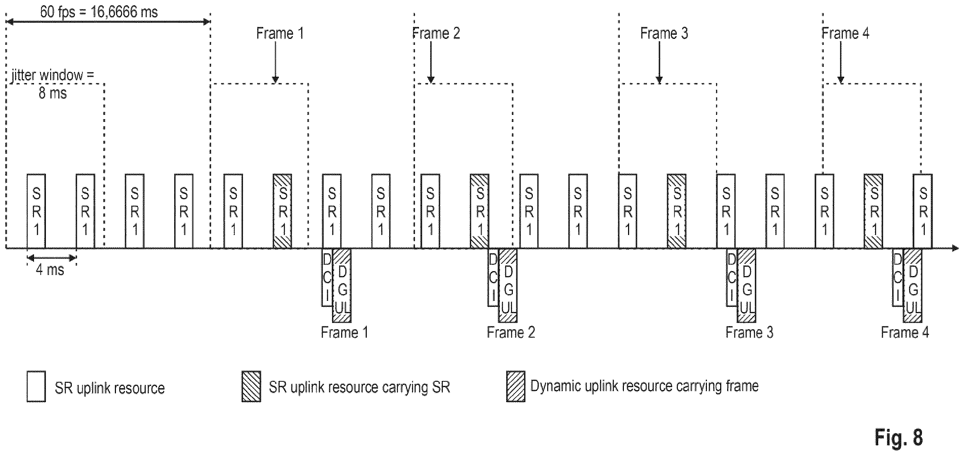

Fig. 8 illustrates such a solution based on dynamic scheduling for the uplink. In particular, Fig. 8 illustrates an exemplary scenario, according to which the UE does not have periodic CG resources available in the uplink but has to request uplink resources using a scheduling request. In said respect, the UE has a scheduling request configuration with periodic uplink resources for transmitting the scheduling request e.g. via the uplink control channel, such as the PUCCH. The SR resources are assumed to have a periodicity of 4 ms. A video stream with 60 fps is assumed, such that a video frame is generated every 1/60=16,6666 ms. The video frames are generated at the UE side over a jitter window of 8 ms. Fig. 8 illustrates how four video frames arrive at different times within the respective jitter windows.

As apparent from Fig. 8, upon arrival of video frame within the jitter window, the UE uses the next SR uplink opportunity to transmit a scheduling request to the base station. The base station, upon receiving the scheduling request, can dynamically grant suitable uplink resources to the UE and transmits a corresponding uplink grant (illustrated as DCI in Fig. 8) to the UE. The UE can then use the granted uplink resources to transmit the video frame in a timely manner to the base station.

The unused SR uplink resources are illustrated with empty boxes, while SR uplink resources used for transmitting SRs are illustrated with striped boxes. Further striped boxes illustrate the dynamically allocated uplink resources for transmitting the video frames.

In order to avoid dynamic scheduling for XR traffic, periodically configured resources, such as SPS or CG, could be used for delivering XR data. This is achieved by reserving periodic resources for the transmissions of the periodic traffic (e.g. XR traffic). In this way, a better reliability with reduced signaling overhead may be achieved, since there is no need to send a DCI indicating individual scheduling resources. For instance, semi persistent scheduling (SPS) and/or configured grant (CG), which have been explained above, could be used for delivering periodic traffic in DL and UL, respectively. The UE can be configured with several SPS and CG configurations. In particular since the current 5G NR supports only integer periodicities expressed by radio frame/slot/symbols for SPS and CG configuration, such an approach however may require reserving excessive resources, which is not resource and power efficient and would reduce the number of supported devices.

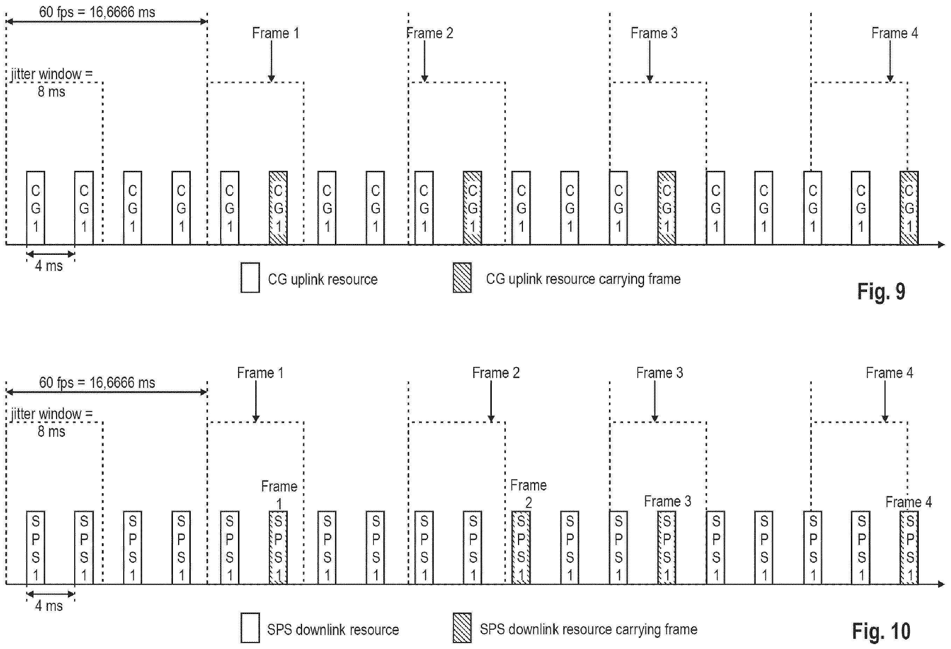

Fig. 9 illustrates such an exemplary scenario, which avoids dynamic scheduling, as an alternative to the SR-scenario of Fig. 8. For ease of illustration and understanding, similar assumptions are made as for Fig. 8, including a jitter window of 8 ms, a periodicity of the CG uplink resources of 4 ms. Fig. 9 illustrates the over-provision, to the UE, of CG uplink resources for transmitting in the uplink a video stream with 60 fps. The UE at least at its application is aware of when the jitter window occurs. Fig. 9 illustrates how four video frames arrive at different times within the respective jitter windows and are then transmitted by available CG uplink resources, within and outside the jitter window. The unused CG uplink resources are illustrated with empty boxes, while CG uplink resources used for transmitting video frames are illustrated with striped boxes.

As also apparent from Fig. 9, it is exemplary assumed that there is only one active CG configuration, here having a periodicity of 4 ms. The periodicity of the CG uplink resources (4 ms) and the video frames (16,6666 ms) do not coincide and result in a relative shift of the occurrence of the CG uplink resources with respect to the jitter window, within which the video frames are generated.

In order to avoid a long latency, sufficient opportunities are provided for the UE to transmit a video frame as early as possible. In the present example, a configured uplink grant with a periodicity of 4 ms is assumed. While the over-provision of CG resources, as illustrated in Fig. 9, can achieve a low latency, it results in a low resource utilization.

Moreover, **Fig. 10** illustrates the over-provision of SPS downlink resources for the UE to be able to receive a video stream, in this case also at 60 fps. For ease of illustration, similar assumptions are made as done for Fig. 9, including a jitter window of 8 ms and a periodicity of the SPS downlink resources of 4 ms. Fig. 10 again illustrates the arrivals of Frame 1-4 at the base station. From UE perspective, the UE is not necessarily aware of the locations of the jitter windows and also not when the video frames are generated at the base station. Rather, the UE periodically monitors all the periodic downlink resources according to the illustrated SPS configuration and will be able to receive the XR video Frame 1-4 illustrated in Fig. 10. As also apparent from Fig. 10, the video frames, although arriving (e.g. being generated) at the base station within the jitter windows, can be transmitted by the base station outside the jitter windows.

XR and video streams are however only particular exemplary scenarios for which the above disadvantages exist. There are other scenarios too. Consequently, the present invention and its solutions do not only apply to XR and video streams.

*Embodiments*

The inventors have thus identified the possibility of providing improved procedures, for allowing to avoid one or more of the above described disadvantages. The present invention relates to different solutions and variants for such an improved procedure. Accordingly, the present disclosure provides techniques for increasing the efficiency of resource usage, in particular in scenarios with periodic traffic, such as XR traffic. In particular, techniques are disclosed that allow supporting non-integer periodicities more efficiently.

The present disclosure in particular provides a scheduling devices, corresponding methods for scheduling devices, user equipments, corresponding methods for user equipments, communications systems comprising such scheduling devices and user equipments, as well integrated circuits which, in operation, control a processes of scheduling devices/user equipment to perform the respective methods.

*Terminology*

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

*Terminal*

A *terminal* or *user terminal* or *user device* or *mobile station* or *mobile node* is referred to in the LTE and NR as a *user equipment (UE)*. This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

*Base Station*

In the present disclosure, the *base station* may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

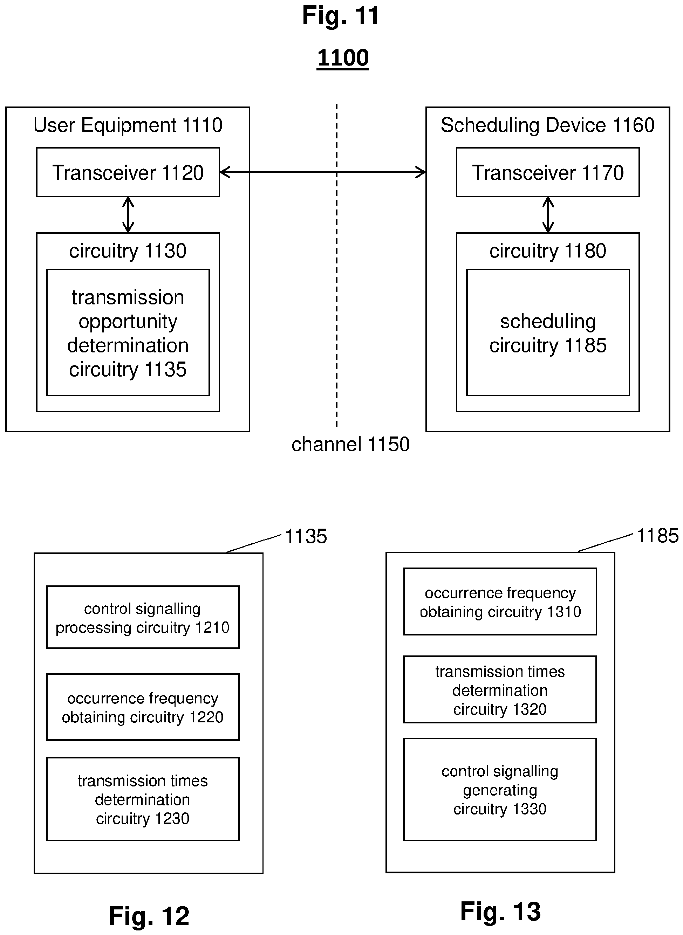

As already mentioned above, the present disclosure provides a base station and a user equipment. The present disclosure further provides a system including a scheduled and scheduling device, as well as a corresponding methods and programs. An example of such communication system is illustrated in **Fig. 11.** The communication system 1100 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 11** illustrates a general, simplified and exemplary block diagram of a communication device 1110 (here exemplarily assumed to be. a UE) and a scheduling device 1160 (here exemplarily assumed to be located in the base station, e.g. the LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 1110 may also be a sensor device, a wearable device, or a connected vehicle, or a controller of an automated machine in an industrial factory. Further, a communication device 1110 may be able to function as a relay between a base station and another communication device (e.g. the disclosure is not limited to communication "terminals" or user "terminals"). As illustrated in **Fig. 11,** the communication device 1110 and the scheduling device 1160 (eNB/gNB) may communicate with each other over a (wireless) physical channel 1150 respectively using their transceivers 1120 (UE side) and 1170 (base station side). Together, the scheduling device 1160 and the terminal 1110 form the communication system 1100. The communication system 1100 may further include other entities such as those shown in Fig. 1. Communication between the communication device (UE) and the scheduling device (base station) is typically standardized and may be defined by different layers, such as PHY, MAC, RRC etc. (see above background discussion).

As illustrated in **Fig. 11** (left-hand side), a communication device may comprise a transceiver and circuitry (or processing circuitry), and a scheduling device may comprise a transceiver and a (processing) circuitry. The ***transceiver*** in turn may comprise and/or function as a receiver and a transmitter. In this disclosure, in other words, the term ***"transceiver"*** is used for hardware and software components that allow the communication device, or, respectively base station to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc. The transmitter may be responsible for performing the process of transmitting and other processes related thereto. The receiver may be responsible for performing the process of receiving and other processes related thereto, such as monitoring a channel. A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 1110 as e.g. illustrated in **Fig. 11** is provided. The communication device 1110 comprises a transceiver 1120 and circuitry 1130. The circuity 1130, in operation, obtains (e.g. by extracting and/or parsing), from a control signaling, an indication indicating a plurality of transmission times. Furthermore, the circuity 1130 obtains an indication of an occurrence frequency of periodic traffic. Moreover, the circuity 1130 determines, based on the control signalling and the occurrence frequency of the periodic traffic, an adapted plurality of transmission times. The transceiver, in operation, (i) receives the control signaling, and (ii) transmits or receives, using one (or more) of the transmission opportunities, a (or more) transmission of the periodic traffic (for each transmission of the periodic traffic, a respective transmission opportunity may be used; not all transmission opportunities may be used).

The circuitry 1130 may implement more functionality than the above-mentioned obtaining and determining, as it may, for instance, further control the transceiver 1120 to receive the control signalling and/or to receive or transmit data. Thus, the circuitry 1130 is exemplarily considered to include transmission opportunity determination circuitry 1135, which is configured to perform said obtaining and determining. The configuration may be provided by hardware adaption and/or by software.

**Fig. 12** shows an exemplary functional structure of the transmission opportunity determination circuitry 1135. In particular, the transmission opportunity determination circuitry 1135 may include control signalling processing circuitry 1210, which may obtain, the indication indicating a plurality of transmission times from the control signaling; occurrence frequency obtaining circuitry 1220, which may obtain the occurrence frequency of the periodic traffic; and transmission times determination circuitry 1230, which may determine the adapted plurality of transmission times. It is noted that the transmission opportunity determination circuitry 1135 may also implement more functionality, as it may, for instance, determine the frequencies of the resources of the transmission opportunities (and just the transmission times, explicitly discussed here).

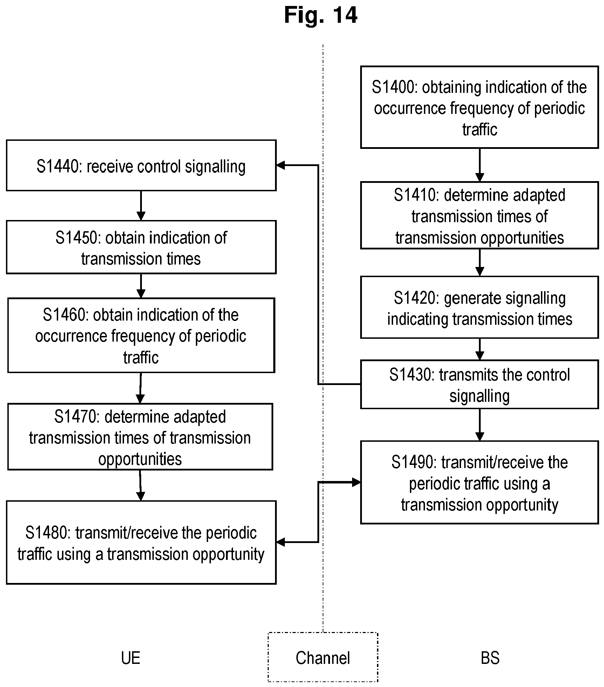

In correspondence with the above described UE, a communication method to be performed by a UE (or communication device) is provided. As shown in **Fig. 14,** the method comprises a step of (i) receiving S1440 control signaling; (ii) obtaining S1450, from the control signaling, an indication indicating a plurality of transmission times; (iii) obtaining S1460 an indication of an occurrence frequency of periodic traffic; (iv) determining S1470, based on the control signalling and the occurrence frequency of the periodic traffic, an adapted plurality of transmission times; and (v) transmitting or receiving S1480, using one (or more) of the transmission opportunities, a (or more) transmission of the periodic traffic.

As also shown in **Fig. 11** (right-hand side), according to another exemplary embodiment, a scheduling device 1160 is provided. The scheduling device 1160 comprises a transceiver 1170 and a circuitry 1180. The circuitry 1180, in operation, obtains an indication of an occurrence frequency of periodic traffic. Furthermore, the circuitry 1180, in operation, determines, based on the occurrence frequency of the periodic traffic, an adapted plurality of transmission times. Moreover, the circuitry 1180, in operation, generates a control signaling that includes an indication indicating a plurality of transmission times. The control signalling allows determination of the adapted transmission times based on the occurrence frequency of the periodic traffic. The transceiver, in operation, (i) transmits the control signaling, and (ii) transmits or receives, using one (or more) of the transmission opportunities, a (or more) transmission of the periodic traffic.

The circuitry 1180 may implement more functionality than the above-mentioned obtaining, determining and generating, as it may, for instance, further control the transceiver 1170 to transmit the control signalling and/or to receive or transmit data. Thus, the circuitry 1180 is exemplarily considered to include scheduling circuitry 1185, which is configured to perform said obtaining, determining and generating. The configuration may be provided by hardware adaption and/or by software.

An exemplary functional structure of the circuitry scheduling circuitry 1185 is shown in **Fig. 13.** In particular, the scheduling circuitry 1185 may include occurrence frequency obtaining circuitry 1310, which may obtain the occurrence frequency of the periodic traffic; transmission times determination circuitry 1320, which may determine the adapted plurality of transmission times; and control signalling generating circuitry 1330, which may generate the control signalling. It is noted that the scheduling circuitry 1135 may also implement more functionality, as it may, for instance, determine the frequencies of the resources of the transmission opportunities (and just the transmission times, explicitly discussed here).

Furthermore, in correspondence with the above described base station, a communication method to be performed by a scheduling device is provided. As shown in **Fig. 14,** the method comprises a step of (i) obtaining S1400 an indication of an occurrence frequency of periodic traffic; (ii) determining S1410, based on the occurrence frequency of the periodic traffic, an adapted plurality of transmission times; (iii) generating S1420 a control signaling including an indication indicating a plurality of transmission times (as further explained below, the control signalling also indicates (but necessarily specifies them completely on its own) the transmission times in the present disclosure referred to as *"adapted transmission times"),* the control signalling allowing determination of the adapted transmission times based on the occurrence frequency of the periodic traffic; (iv) transmitting S1430 the control signaling; and (v) transmitting or receiving S1490, using one (or more) of the transmission opportunities, a (or more) transmission of the periodic traffic.

Moreover it is noted that, since the present disclosure relates to resource usage and scheduling, both entities, a scheduled device (typically communication device/transceiver device) and scheduling device (typically network node) take part. Thus, in the further description, the details and embodiments apply to (and may be implemented by them) each of the communication device, the scheduling device (or scheduling nodes) and the methods unless explicit statement or context indicates otherwise. In particular, any of the steps/operations described below may be performed or controlled by the circuitry 1130 (on the UE side) and/or the circuitry 1180 (on the base station side). Furthermore, any reception and transmission steps may performed by the transceiver 1120 (on the UE side) and/or the transceiver circuitry 1170 (on the base station side) (e.g. by being controlled by the respective circuitry to do so).

### *Periodic Traffic*

It is noted that the term *"periodic traffic"* includes quasi-periodic such as the above- described XR traffic. In other words, the periodic traffic refers to traffic with individual data transmission with an underlying periodicity (e.g. 60 frames per second for a video corresponding to e.g. 60 data transmissions per second). As explained with respect to XR traffic, the precise time of the individual data transmission of the periodic traffic may vary. In particular, the time between two transmissions of the periodic traffic may not also always be the same.

### *Occurrence Frequency*

An indication of the *periodicity* or *occurrence frequency* of the periodic traffic may thus be an indication of the average time between two transmissions of the periodic traffic. The indication may also be an indication of the average/expected number of transmissions in/per a certain time interval (e.g. the number of transmissions per second). In particular, such an indication may also be an indication of a jitter window pattern, such as an indication of (i) the number of jitter windows per time (frequency), (ii) the separation between jitter windows, and/or (iii) the size/duration of the jitter windows.

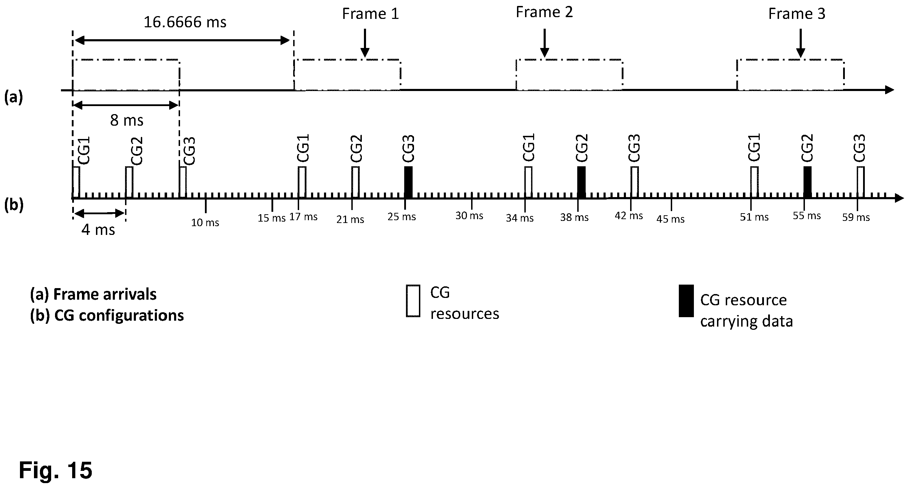

Regarding Steps S1460 and S1400, in which the indication of the occurrence frequency is obtained respectively by the communication device and the scheduling device, it is noted that each device may obtain said indication e.g. from a higher-layer. However, in general, one of the device may also indicate the occurrence frequency to the other device via a transmission. In particular, the control signalling transmitted in step S1430 may include such an indication for the UE. For instance, the indicated transmission times may already have be an accordance with the periodicity of the periodic traffic, as e.g. shown in and explained below with respect to the example of Fig. 15. In general, the present invention is not limited to a particular way the UE or base station obtains the occurrence frequency.

### *Transmission Time*

It is further noted that the term *"transmission time"* may refer to a time point (point in time, time instance), but also to a time interval. In case of a time point the transmission time may e.g. be the time point the transmission (or the resources of said transmission) starts or the time point the transmission ends. In case of a time interval, the transmission time may be the interval from the time point the transmission starts to the time point the transmission ends. If the duration of the transmissions (or the time length of the resources of the transmissions) are known (e.g. all transmissions/transmission opportunities have a same predetermined/known length), the time point, e.g. the start point, directly correspond to the time interval of the transmission.

### Transmission Opportunity

Furthermore, it is noted that the term *"transmission opportunity"* is not limited to a particular direction of the transmission (Uplink/Downlink/Sidelink). In other words, a transmission opportunity may be (for a given device) an opportunity to receive or transmit a transmission.

Accordingly, the UE and the scheduling device may receive or transmit a transmission of the periodic traffic in step S1480 and S1490, respectively (if they are communicating with each other, one of them is receiving and one of them is transmitting). It is worth noting noted that in case of SR, the transmission opportunities are used for requesting uplink resources. In other words, the transmission opportunities used for transmissions of the periodic traffic are used for transmitting control information/signalling of the periodic traffic, and not for transmitting data of the periodic traffic.

Furthermore, it is noted that *transmission opportunity* in general refers to time-frequency resources reserved for transmission/reception of the respective and that the respective device may use (in case of reception, more precisely, should monitor). However, in the present context, the time/timing and of the transmission opportunities is of particular concern, whereas the frequency of the resources has in general no particular interaction with the issues discussed here. These times/timings of the transmission opportunities are the transmission times here termed *"adapted transmission times"* and not the transmission times here termed *"indicated transmission times"*. This being said, the control signalling may in general also indicate the frequencies of the transmission opportunities.

Furthermore, as indicated by the word *"opportunity"*, a *transmission opportunity* may not actually be used for a transmission. In particular, in general only some (e.g., one or more) of the transmission opportunities are used, but not necessarily all are used. For instance, as explained above with respect to XR-traffic, the next transmission may not be ready when a certain transmission opportunity occurs, and a later transmission opportunity, preferably in the same jitter window may be used. If the transmission opportunities are opportunities to receive transmissions, a transmission opportunity corresponds to time-frequency resources in which a transmission may be received and which are thus monitored.

### Basic Time Unit

In general, the transmission times of the adapted plurality are separated from each other by integer-multiples of a basic time unit. Here, the term *"basic time unit'* or *"granularity"* refers to a time length (duration). For instance, it may be the length of a symbol, a frame, a subframe, a slot, etc. In general, the basic time unit may be predetermined and/or the basic time may be the basic time unit of the resource grid employed by the UE (usually the symbol length, henceforth also referred to as *basic grid unit*). Alternatively, the control signaling (or a different control signalling, e.g. another DCI or RRC message) may include an indication of the basic time unit. For instance, the base station may thus (i) determine, e.g. as part of the determining of the adapted transmission times, the basic time unit; (ii) determine the adapted transmission times taking into account and/or based on the basic time unit; and/or (iii) determine, e.g. as part of the determining of the adapted transmission times, whether the basic time unit is to be changed and a corresponding indication is to be transmitted to the UE e.g. as part of the control signalling. In general, the basic time unit is an integer-multiple of the basic time unit of the employed resource grid. Thus, the basic time unit may, for instance, be indicated by indicating the integer by which the basic time unit of the grid has to be multiplied to obtain the basic time unit of the separation of the adapted transmission times.

### Control signalling and indication indicating the plurality of transmission times

The control signaling includes an indication indicating a plurality of transmission times. Regarding this, it is first to be noted that the control signalling only indicates the here termed *"indicated plurality of transmission times"* or **"indicated transmission times"** if the periodicity of the periodic traffic and/or the basic time unit would not be taken into account.

Thus, the (same) indication indicating the indicated plurality is also an indication of the adapted plurality of transmission times. Thus, the UE may obtain the indication of the (indicated) transmission times from the control signalling in step S1450, by obtaining an indication of the adapted transmission times (which are also indicated). It is noted that this is related to the fact that the adapted transmission times are related to the transmission times, here referred to as indicated transmission times, by taking into account the periodicity and/or the basic time unit. In other words, the indication may (i) indicate and even (completely) specify the indicated transmission times, (ii) indicate the adapted transmission times, and/or (iii) together with the periodicity and/or the basic time unit (which may also be part of the control signalling/indication), (completely) specify the adapted transmission times.

In general, the indication indicating the plurality of transmission times (and/or the control signalling) may be an indication of a configured grant (CG) configuration, an (SPS) configuration, and/or a scheduling request (SR) configuration. In other words, the control signalling may be a signalling configuring the UE with a CG/SPS/SR configuration, in particular a CG/SPS/SR configuration with a non-integer periodicity (e.g. non-integer when the periodicity is expressed in units of the basic time unit or the basic grid unit). The transmission opportunities the UE determines in S1470 may thus correspond to the time-frequency resources of this CG/SPS/SR configuration. In general, as explained above, a CG/SPS/SR configuration may indicate (together with the periodicity and the basic time unit, which may be known and/or be considered part of the CG/SPS/SR configuration/indication) the periodicity, time, and frequency allocation of the CG/SPS/SR resources.

In general, the indicated transmission times may be uniformly spaced in time-domain (each two directly successive transmission times may be separated by the same time-distance, thus they may be given by one time reference point and said time distance), whereas the adapted transmission times may not be uniformly spaced, at least in this strictly sense (cf. rounding example explained below; it is noted that in case of rounding there may be a uniform pattern of separations that repeats itself after a view adapted transmission times).

### Transmission opportunities and adapted transmission times

As already explained above, the control signalling and the indication indicating the *"indicated transmission times"* also indicates the adapted transmission and the transmission opportunities. Regarding this, it is first to be noted that the word *"adapted'* in the term *"adapted transmission time"* merely refers to the fact that the plurality of adapted transmission times is in general different from the indicated plurality of transmission times. In other words, the *"adapted'* is seen from the point of view of an UE that first determines the indicated transmission times and then adapts them, by taking into account the occurrence frequency and/or the basic time unit (e.g. in step S1470), to obtain said adapted transmission them. However, the adapted transmission times are the actually indicated transmission times the base intends to indicate to the UE. In other words, the indicated transmission times are the transmission times the control signalling would indicate in case the occurrence frequency and/or the basic time unit would not have to be taken into account. However, since the UE is supposed to take the occurrence frequency and/or the basic time unit into account, the transmission times here referred to as adapted transmission times are the actually indicated transmission times. Furthermore, it is noted that the UE may does not have to perform such an adaption and may directly obtain, based on the control signalling and the occurrence frequency, the adapted transmission times from the control signalling. Thus, the terms *"adapted transmission times"* and *"indicated transmission times"* may be considered to be merely labels. Summarizing, the adapted transmission times are the transmission times of the transmission opportunities, and the indicated transmission times are transmission times the control signalling would indicate if occurrence frequency and/or the basic time unit would not have to be taken into account.

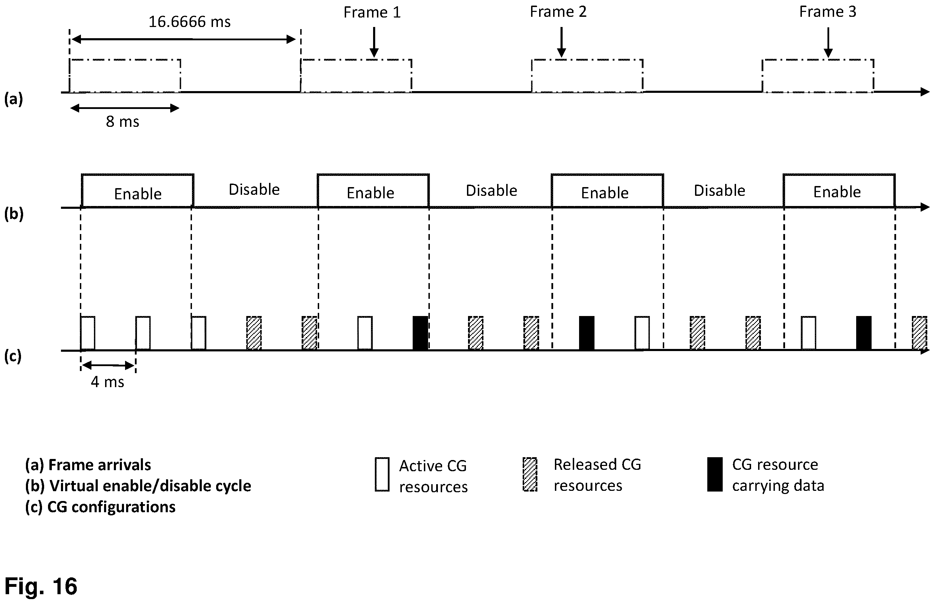

Here, it is also to be noted that not each adapted transmission time has to be *different* from all indicated transmission times. In particular, some or even all adapted transmission times may be part of the indicated plurality of transmission times. For instance, the adapted plurality of transmission times may be obtained from the indicated plurality of transmission times by removing some of the indicated transmission times from the indicated plurality, as e.g. explained with respect to Fig. 16. In other words, the adapted plurality may be a subset of the indicated plurality.

In general, the adapted transmissions times (i) are separated from each other by integer-multiples of the basic time unit; and (ii) correspond (e.g. in one-to-one manner) to respective transmission opportunities for transmissions of the periodic traffic. For instance, the adapted transmission times may be the start times of the transmission opportunities, or the time intervals (given e.g. by the start and the end time, or by the start time and the duration) of the transmission opportunities.

It is further noted that the time between two directly successive adapted transmissions times may not be identical for each pair of directly successive adapted transmissions times (cf. rounding examples discussed below). Said correspondence may be that an adapted transmission time is the start time of the respective transmission opportunity, or that the adapted transmissions time is the time interval the transmission opportunities occupies. It is further noted that, by contrast, the *"indicated transmission times"* are in general (i) not separated from each other by integer-multiples of the basic time unit; and/or (ii) do not correspond to respective transmission opportunities for transmissions of the periodic traffic.

Furthermore, the adapted transmissions time usually correspond to the periodicity of the periodic traffic, whereas the indicated transmission times do not. In particular, the separations (in time-domain) between the adapted transmissions times, which are integer-multiples of the basic time unit, may correspond to the occurrence frequency. Thus, said integer-multiples of the basic time unit may correspond to the occurrence frequency.

For instance, if the adapted transmission times are the start times of the transmission opportunities, the average time-domain separation between directly successive transmission times may correspond to (i) the average time-domain separation between the start times of directly successive jitter windows, and/or (ii) correspond to the inverse of the occurrence frequency (e.g. in case of an occurrence frequency of 60 transmissions per second, the average time-domain separation between the transmission start times could be (around) 1/60 seconds).

### Determination of transmission opportunities and adapted transmission times

Regarding determination of the adapted transmission times by the UE and the scheduling device in steps S1470 and S1410, respectively, it is firstly noted that, since the UE and the scheduling device form a communication system both determination should in general yield the same result. In other words, both devices should be aware of the same transmission opportunities.

However, the determination of the UE may differ from the determination of the scheduling device in several respects. Firstly, the determination of the scheduling device may be the step in which the transmission times/opportunities are set/defined, whereas the UE generally only infers the transmission times determined by the scheduling device. Secondly, the scheduling device may thus take into account additional parameters such as available resources, quality of service, requests from UEs, received channel state information, traffic loads, battery status of UEs, and the like in addition to the occurrence frequency. Some of these parameters as well as the occurrence frequency and the basic time unit may be known to the UE, or may even be indicated, via a transmission by the UE to the scheduling device. Furthermore, on the base station side, as already mentioned above, the determination may include setting/determining the basic time unit or deciding whether to change the basic time unit (and to change to what value). In particular, the scheduling device may try to optimize all these parameters and to find based on all of this the most suitable transmission opportunities. Thus, in general, the scheduling device is the one deciding the transmission opportunities/transmission times in its determination, whereas the UE usually only determines/infers the transmission opportunities set by the base station. The determination of the UE is based on the control signalling, the basic time unit (the basic time unit may be the basic grid unit, which may be implicit), and/or the occurrence frequency.

Since the determination of the UE should yield the same result as the determination of the scheduling device, the methods according to the present disclosure in general apply to the UE and the base station side (network node, scheduling device). However, the particular determinations of the adapted transmission times disclosed herein concern the base station in a different way: the base station has to generate the control signalling such that the UE can/will determine the intended/correct adapted transmission times based on the generated control signalling. Thus, the generated control signalling should allow the UE to determine the adapted transmission times. Accordingly, there may be a step (at the base station side) of determining the indicated transmission times of the control signalling based on: the adapted plurality, the occurrence frequency, and/or the granularity. The occurrence frequency of the periodic traffic and/or the basic time unit, which may also be required for the determination of the adapted transmission times at the UE side, may be already (implicitly) known to the UE or may also be indicated with this or another control signalling. In other words, the determination of the adapted transmission times by the UE directly corresponds to the generation of the control signalling by the scheduling device.

### Taking into account the basic time unit

In general, the traffic may have a different periodicity than can be matched by the granularity of the resource grid. For instance, as an example, a video stream may have a periodicity of 60 fps (frames per second), corresponding to e.g. 60 transmissions per second. This corresponds to periodicity of 16.667 ms or, more precisely 16 2/3 ms. which is not an integer-multiple of the usual symbol length.

In general, the scheduling device may indicate the UE with resources having the non-integer periodicity of the periodic traffic. In other words, each two consecutive (e.g. directly successive) transmission times of the indicated transmission times may be separated (in time-domain) by a same time distance. Such time distance may e.g. be the time between the start times of two transmission times, the time between the end of the first transmission time to the start of the second transmission (first and second in time-order), or the time between the two end times of the two transmission times. In other words, the transmission times are equally spaced in time domain. The transmission times may thus be (e.g. completely) specified by one time point and said time distance. More specifically, in general the time instance for a resource (and/or the indicated transmission times) may be given according to $t + n * x$; $n = \{0,1,2,..\}$, where "*" denotes multiplication, t is an offset value in time domain, changing the beginning of the resources, for instance from the beginning of a frame, x is the *"same time distance"* by which the resources are separated, and $n$ is a label for different transmission times/resources ordered in time (i.e., the (n+1)-th indicated transmission time would be $t + n * x$). Accordingly, the values of t and/or x could be indicated by the control signalling that includes the indication of the indicated transmission times. The unit of t and/or x (slots, ms, frames, etc) could also be indicated or be predetermined and/or predetermined.

In particular, a UE may be indicated with the non-integer periodicities regarding/in terms of radio frame/slot/symbols for SPS/CG/SR configurations (e.g. the value of the above x would be a non-integer, when expressed in terms of one or more of these units). In case of selecting a non-integer value regarding radio frame/slot/symbols (e.g., x= 11.111, 8.333, or 16.667, when expressed in terms of ms) for the periodicity, the time instance for a resource (and/or the indicated transmission times) may also be given according to $t + n * x; n = \{0,1,2,..\}$, as already explained above. For instance the frequency may be given, as x ms periodicity, corresponding to periodicity of x ms: This can be achieved by adding new (non-integer) periodicities to the supported periodicity values for SPS/CG/SR config, as illustrated below. In addition, a matching method and/or a granularity of matching may be included in the config, as also illustrated below.

Alternatively or in addition, the UE may be indicated with the number of resources over a given time period, e.g., the number of resources per second or the number of packets/frame arrivals over a given time period, e.g., fps.: If the number of resources over a given time is given, e.g., y frame per second, x would be proportional to 1/y. If the y is provided (indicated), there is no need to indicate the periodicity value (since y already indicates the periodicity). The UE can determine the periodicity according 1/y. However, the 1/y could be non-integer value, then it needs to match that to the resource grids. In other words, the difference is just that in one case y and in the other x is explicitly indicated. However, it is noted that both x and y are indicated since x is an indication for y=1/x as well (and vice versa).

x may also be a time corresponding to the periodicity of the periodic traffic which may be a non-integer periodicity (in other words, x may be any real number). It is noted that, in such a case, the occurrence frequency may be indicated, implicitly to the UE, by the separation distance x. In other words, the UE may obtain, in step S1460, the indication of the occurrence frequency from the control signalling by extracting the value of x. Put differently, the indication indicating the occurrence frequency may be said same time distance x and/or an indication of said same time distance x.

In summary, in general the control signalling may include an indication of resources with a non-integer periodicity in terms of the basic time unit. This non-integer periodicity may correspond (even be equal) to the periodicity of the periodic traffic or, at least, may be closer to the periodicity of the periodic traffic than resources that have integer periodicity. However, the periodicity of the resources may be in conflict with the basic grid unit. The UE may then match the *"indicated resources/transmission times"* to the grid based on some matching method (here also referred to as rule), as further explained below, thereby obtaining the actually indicated adapted transmission times.

The flexibility of this approach can further be increased (this is entirely optional) by allowing for matching of the indicated resources to different granularity than the granularity of the grid (e.g. a coarser grid than the standard grid). Furthermore, the matching to a granularity can also be applied (also optional) to resources with an integer periodicity, i.e. also to resources that fit into the grid.

### *Matching method*

In general, a **matching method** or **rule** (e.g., rounding, ceiling, floor) may be used to adaptively adjust the SPS/CG/SR resources with the indicated granularity. The start instance of the resource (of the transmission opportunity) is determined by the matching method (rounding/ceiling/floor) with respect to the defined granularity *g*. In other words, the matching method may be used to determine an adapted transmission time corresponding to an indicated transmission time, based on said indicated transmission time the and the granularity (a reference time/time offset may also be used)

Allowing for a different granularity/basic time unit than the basic grid unit may further increase the flexibility of the signalling. In particular, such a granularity may also be used if the periodicity of the traffic could be matched by the granularity of the grid (e.g. integer periodic traffic) to indicate a different set of resource than otherwise possible. In particular in this case, the granularity may be considered to be part of the matching method.

In general, the control signalling may indicate the rule. For instance, as explained below, the SPS/CG/SR config could be extended to contain an indication of a granularity (e.g., slot/mini-slot/symbol) and a matching method. However, the present invention is not limited thereto as the granularity and/or the matching method may also be predefined or predetermined. In general, each matching method may also be linked to a specific granularity, and/or the matching method and the granularity (of the matching method) may be indicated jointly.

In general, when using a matching method, for each indicated transmission time, there is a corresponding adapted transmission time corresponding to said indicated transmission time. In other words, there may be a one-to-one correspondence between the adapted transmission times and the indicated transmission times.

In general (i) if the indicated transmission time is not separated from a reference time by an integer multiple of the basic time unit, the adapted transmission time is determined to be a time closest after or closest before the indicated transmission time among times separated from the reference time by an integer multiple of the basic time unit, and (ii) otherwise, the adapted transmission time is determined to be the indicated transmission time.

In other words, a matching method may in general not change indicated transmission time that are already in accordance with the granularity and a reference time. Said reference time is in general a time point on the resource grid employed by the UE (it may e.g. be the beginning of a frame). In accordance with the granularity and a reference time can be understood as on a time grid defined by the reference time and granularity. This virtual time grid will in general only comprise a subset of the time points of the resource grid employed by the UE.

Furthermore, a matching method may in general change, in order to obtain the corresponding adapted transmission time, an indicated transmission time that is not in accordance with the granularity and the reference time to a time point that is in accordance with the granularity and the reference time. The time point to which the indicated transmission time is changed may in general be either the next time point or the previous time point. Here, the term *"next time point'* refers to the closest (in time domain) time point after the indicated transmission time that is in accordance with the granularity and the reference time. Furthermore, the term *"previous time point'* refers to the closest (in time domain) time point before the indicated transmission time that is in accordance with the granularity and the reference time. Here, for both terms, *"closest'* refers to closest among time points that are in in accordance with the granularity and a reference time. Thus, in other words, the previous time point is the closest time (point) among times (time points) before the indicated transmission time that are separated from the reference time by an integer multiple of the basic time unit. Correspondingly, in other words, the next time point is the closest time (point) among times (time points) after the indicated transmission time that are separated from the reference time by an integer multiple of the basic time unit.

In general, the matching method/rule may also specify the conditions under which the next and under which the previous time point is to be picked. In particular, a rule may specify how it is to be determined, if an indicated transmission time is not separated from a given reference time by an integer multiple of the basic time unit, whether the corresponding adapted transmission time is:

(i) the closest time among times that are separated from the reference time by an integer multiple of the basic time unit;
(ii) the closest time among times before the indicated transmission time that are separated from the reference time by an integer multiple of the basic time unit; or
(iii) the closest time among times after the indicated transmission time that are separated from the reference time by an integer multiple of the basic time unit.

Thus, in general sometimes the adapted transmission time may be the closest time point, sometimes the next, and sometimes the previous (it is noted that the closets time point is usually either the next or the previous time point; except when both of them are equally close; in any case the decision is between two points, the next and the previous, which is here only presented as a choice between three options). The decision which one of the three above options (i) to (iii) applies may be specified by said rule.

As an example, for instance, always the previous time point may be picked. This corresponds to a floor operation, i.e. corresponds to always rounding down to the next integer. In other words, for the floor method, the start symbol is $s = g\lfloor n * x/g \rfloor$, when the time instance determined based on the non-integer periodicity $x$ is matched to the start symbol (t=0) according to the configured granularity $g$. For an arbitrary reference time/offset, the adapted transmission time corresponding to the (n+1)-th indicated transmission time is thus determined to be $s = g\lfloor (t + n * x)/g \rfloor$. In other words, in general it may be determined, for each indicated transmission time that is not separated from the given reference time by an integer multiple of the basic time unit, that the corresponding adapted transmission time the previous time point (otherwise, the adapted transmission time may be taken to be the indicated transmission time).

Furthermore, for instance, always the next time point may be picked. This corresponds to a ceiling operation, i.e. corresponds to always rounding up to the next integer. In other words, for the ceiling method, the start symbol is

$$s = g \left\lceil n * \frac{x}{g} \right\rceil$$

, when the time instance determined based on the non-integer periodicity $x$ is matched to the start symbol (t=0), according to the configured granularity $g$. For an arbitrary reference time/offset, the adapted transmission time corresponding to the (n+1)-th indicated transmission time is thus determined to $s = g\lceil (t + n * x)/g \rceil$. In other words, in general it may be determined, for each indicated transmission time that is not separated from the given reference time by an integer multiple of the basic time unit, that the corresponding adapted transmission time is next time point (otherwise, the adapted transmission time may be taken to be the indicated transmission time).

Moreover, as a further example for a matching rule, always the closest time point may be picked as the corresponding adapted transmission time. This corresponds to a true rounding operation, i.e. corresponds to always rounding to the closest integer. In other words, for the rounding method, the start symbol is $s = g[n * x/g]$, when the time instance determined based on the non-integer periodicity $x$ is matched to the start symbol (t=0) according to the configured granularity $g$. For an arbitrary reference time/offset, the adapted transmission time corresponding to the (n+1)-th indicated transmission time is thus determined to be $s = g[(t + n * x)/g]$. "[]" here denotes true rounding (including some convention how to round .5 decimals/ which to pick in case of two closest time points). In other words, in general it may be determined, for each indicated transmission time that is not separated from the given reference time by an integer multiple of the basic time unit, that the corresponding adapted transmission time is a closest time among times that are separated from the reference time by an integer multiple of the basic time unit (otherwise, the adapted transmission time may be taken to be the indicated transmission time).

*Example of SPS/CG/SR config*

An example for included additional information in an information element SPS/CG/SR config (in general an information element defined in the syntax of the radio resource protocol and related to configuration of SPS and/or CG and/or SR resources) is given below (new syntax indicated by underlining):

periodicity ENUMERATED {sym2, sym7, symlxl4, sym2xl4, sym4×14, sym5×14, sym8×14, sym10×14, sym16×14, sym20×14,sym32×14, sym40×14, sym64×14, sym80×14, sym128×14, sym160×14, sym256×14, sym320xl4, sym512×14,sym640×14, syml024xl4, sym1280×14, sym2560xl4, sym5120×14, sym6, sym1×12, sym2×12, sym4×12, sym5×12, sym8×12, sym10×12, sym16×12, sym20×12, sym32×12,sym40×12, sym64×12, sym80×12, sym128×12, sym160×12, sym256×12, sym320×12, sym512×12, sym640×12,sym1280×12, sym2560×12, 11.111ms, 8.333ms,16.667ms}, matching ENUMERATED {rounding, floor, ceiling} granularity ENUMERATED {syml, sym2, sym7, ..., sym14, ...}

The new entries "11.111ms", "8.333ms","16.667ms" represent the new non-integer periodicities that may now be used. It is noted that these values are only exemplary. Other values may be used. Also more or fewer than 3 new values may be introduced.

Furthermore, exemplarily the SPS/CG/SR config now allows for the indication of the matching methods, "rounding", "floor", and "ceiling" to be used and indicated, as well as of different granularities (basic time unit equal to the length of 1, 2, 7 ... , 14, ... etc symbols).

As an example for the present approach, **Fig. 15** illustrates a UE configured with three different CG configurations for a video stream with 60 fps. The three CG configurations are denoted as CG1 to CG3, respectively, and Fig. 15 shows the resources corresponding to these three configurations in a time interval from 0 ms to roughly 64 ms. The periodicity of all three CG configurations is 16.667 ms. In other words, using the representation of the start times $t + n * x$; $n=\{0,1,2,..\}$, the x value of each CG configuration is 16.66 7ms, and the t values are 0 ms, 4 ms, and 8 ms for the three configurations, respectively. The matching method, employed in Fig. 15, is ceiling with the granularity of 1 ms (the start of a resource can only be a start of a new ms; in other words, resources may only start every 1 ms with respect to some reference time). The starting symbols of CG resources for CG configurations CG1 to CG3 are respectively derived according to

$$s = 1\,\text{ms} * \lceil n * 16.667\,\text{ms}/(1\,\text{ms})\rceil = \lceil n * 16.667 \rceil\,\text{ms}$$

$$s = 1\,\text{ms} * \lceil (4\,\text{ms} + n * 16.667\,\text{ms})/(1\,\text{ms})\rceil = \lceil n * 16.667 \rceil\,\text{ms},$$

and

$$s = 1\,\text{ms} * \lceil (8\,\text{ms} + n * 16.667\,\text{ms})/(1\,\text{ms})\rceil = \lceil n * 16.667 \rceil\,\text{ms}.$$

As can be seen in row (b) of Fig. 15, for the first CG configuration, with t=0 ms, this yields 0 ms, 17 ms, 34 ms, and 51 ms as the start locations of the transmission opportunities (or adapted transmission times). Furthermore, for the second CG configuration, with t=4 ms, this yields 4 ms, 21 ms, 38 ms, and 55 ms as the start locations of the transmission opportunities (or adapted transmission times). Moreover, for the third CG configuration, with t=8ms, this yields 8 ms, 25 ms, 42 ms, and 59 ms as the start locations of the transmission opportunities (or adapted transmission times). In case

It is noted that alternatively x =50/3 ms could be sued for the periodicity, which would more precisely correspond to the periodicity of 60fps. The starting symbols would then be determine according to $s = 1\lceil t + n * 50/31$, which result in 0 ms, 17 ms, 34 ms, and 50 ms; 4 ms, 21 ms, 38 ms, and 54 ms; and 8 ms, 25 ms, 42 ms, and 58 ms for the first to third CG configurations respectively.

*Reference time t*

In general, the above,-mentioned reference time t may be a beginning of a frame, subframe, slot, or symbol in which the indicated transmission time or a reception of the control signalling is located. Alternatively, the given reference time may said beginning of the frame, subframe, slot, or symbol plus a predetermined time offset. In general, the value of t and/or the reference time may be predetermined, indicated by the scheduling device to the UE, or set by other means. Thus, in general the UE may also obtain, from the control signaling, an indication indicating the time offset and/or the reference time. However, the present invention is not limited to this particular scenario.

In general, as already done in the above example, the same reference time t may be used for all indicated transmission times. It is noted that in the above example illustrated in Fig. 15, the different t values are related to different plurality of transmission times, but the same value of t is used for all indicated transmission times of the same plurality of indicated transmission times. In other words, in the example of Fig. 15, the same reference time is used for each indicated transmission time of one indicated plurality.

***Taking into the occurrence frequency of the periodic traffic* - *Enable/Disable-cycles***

The present approach differs from the above matching-method-approach in that the times of the indicated transmission times are not changed to obtain the adapted transmission times. Rather, the plurality of indicated transmission times differs from the adapted plurality in that some of the indicated transmission times are removed from the indicated plurality. Accordingly, in the present approach, in general, each two consecutive transmission times of the indicated transmission times are usually already separated by an integer multiple of the basic time unit.

Thus, the indicated transmission times are already in accordance with the granularity of the resource grid employed be the UE.

However, the indicated transmission times do not reflect the periodicity of the periodic traffic, which may lead to many unused resources. In order to improve the resource usage, an alternating cycle of valid time periods and invalid time periods is provided. This cycle or ***virtual cycle*** is then used to remove resources that are likely not needed from the indicated plurality.

Accordingly, the virtual cycle may corresponds to the periodicity of the periodic traffic. The indication of the occurrence frequency, obtained by the UE in step S1460, may be an indication of the alternating cycle of valid time periods and invalid time periods. Accordingly, the base station may generate such an indication of the virtual cycle and transmit this indication to the UE (e.g. as part of the here discussed control signalling but also via a different transmission). The indication of the virtual cycle may correspond to a start time e.g. of one enable/disable phase, and the duration of enable and disable phase (only one duration may be indicated if they both have the same duration). But this only an example for the most simple virtual cycle patterns. The present invention is limited to any particular cycle form or signalling of the cycle form. In general, in particular for SPS, the scheduling device may indicate the virtual cycle to the UE via DCI and/or RRC. For CG and SR, the UE may e.g. inform the scheduling device of the periodicity of the traffic, and then the scheduling device may configure CG/SR and the virtual cycle accordingly e.g. through RRC. Generally, the scheduling device may set the periodicity according to the UE requirements.

As illustrated in **Fig. 16,** the virtual cycle may essentially be a separation or division of the time axis in two categories: *"valid times"* in which the indicated transmission times are valid (or "enabled") and are, thus, adapted transmission times, and *"invalid times"* in which the indicated transmission times are invalid (or "disabled") and are, thus, not adapted transmission times.

More specifically, for instance, each indicated transmission time that overlaps with a (i.e. any) valid time period may be part of the adapted plurality, and each indicated transmission time that does not overlap with a (i.e. any) valid time period, may not be not part of the adapted plurality of transmission times. Alternatively, each indicated transmission time that does not overlap with an invalid time period may be part of the adapted plurality of transmission times, and each indicated transmission time that overlap with an invalid time period may not is not part of the adapted plurality of transmission times.

In other words, whether or not an indicated transmission time overlaps with an enable phase may determine whether said indicated transmission time is valid. In general, the transmission times may here considered to be the time intervals of the transmission and just a point, e.g. a start point. In this case, different results may be obtained depending how partial overlap with an enable/disable phase is treated. This difference is represented by the wordings above, where *"overlaps with"* is used to mean *"partially overlaps",* i.e. has a *"non-zero intersection with".*

Further wordings how the determination of the adapted transmission opportunities is performed can be obtained by replacing, in the above examples, the phrases *"overlaps with"* and *"does not overlap with",* with the phrases *"is included in"* (i.e. *"lies completely within"*) and *"is not included in"* (i.e. *"does not lie completely within"),* respectively.

In general, a SPS/CG/SR configuration (or more generally a set of periodic resources, i.e. indicated transmission times) can be linked to a DRX cycle or a virtual cycle consists of enable and disable states. The DRX or virtual cycles can support non-integer periodicities. An SPS/CG/SR resource may then be valid for use only if it fully/partially overlaps with the enable state. For instance, "a DRX or a virtual cycle consists of enable and disable states" could be "drx-onDurationTimer with the non-integer periodicities regarding radio frame/slot/symbols."

As illustrated in **Fig. 16,** an SPS/CG/SR resource is valid and can be used if the resource fully/partially overlaps with the enable state; otherwise, the resource cannot be used. As an example, a virtual cycle is defined for the UE with the periodicity of 16.667 ms, as shown row (b) of Fig. 16. The virtual cycle correspond to the jitter windows, as illustrated in row (a) of Fig. 16. A CG configuration with the periodicity of 4 ms is configured, as shown in row (c) of Fig. 16, and liked to the virtual cycle. The UE can only use CG resources that partially overlap with the enable state of the cycle. In other words, the shaded CG resources are invalid/released and, thus, be assigned by the scheduling device for other transmissions.

In general, the virtual cycle could be defined flexibly according to the traffic type. For instance, it can be defined according to the number of frame arrivals, i.e., fps. Linking the SPS/CG/SR configuration to a DRX or a virtual cycle enables using SPS/CG/SR configurations without the need of frequent reconfigurations. This reduces the signaling overhead. In addition, the resource utilization is increased since only a part of resources can be used. Consequently, the power consumption is reduced.

***Taking into the occurrence frequency of the periodic traffic - offsets***

In this approach, as in matching-method-approach (but in contrast to the cycle-approach), the times of the indicated transmission times are changed to obtain the adapted transmission times. Thus, when using the present approach, there is in general for each indicated transmission time, a corresponding adapted transmission time corresponding to said indicated transmission time. In other words, there may be a one-to-one correspondence between the adapted transmission times and the indicated transmission times. However, in the present approach the change of the indicated plurality is based on the periodicity and not on the granularity (this is different from the matching-method-approach, but in common with the cycle-approach).

More specifically, for each indicated transmission time the corresponding adapted transmission time may be determined by shifting said indicated transmission time by an offset multiplied by an integer, the integer corresponding to a number the time duration (here also referred to as *timer*) fits into a time interval between the reference time and the indicated transmission time. In general, if the time instance for a resource (and/or the indicated transmission times) is as above given according to $t + n * x$ ; $n = \{0,1,2,..\}$, the adapted transmission time corresponding to the (n+1)-th indicated transmission time may thus be expressed as

$$s_n = t + n * x + offset * \lfloor (t + n * x - refT)/timer \rfloor,$$

where *offset* denotes said time offset, "$t + n * x$" correspond to the (n+1)-th indicated transmission time as explained above, *refT* denotes the reference time, and timer denotes the time duration/timer. Here, exemplarily the floor function has been used. However, the any rounding operation may be used.

The main benefit of the present approach to add additional time is to compensate the drift of SPS/CG/SR resources without the need of frequent reconfigurations.

each two consecutive transmission times of the indicated transmission times are usually already separated by an integer multiple of the basic time unit. Thus, the indicated transmission times are already in accordance with the granularity of the resource grid employed by the UE.

In general, the indication of the occurrence frequency of the periodic traffic may be (i) an indication of a positive or negative non-zero offset, and (ii) an indication of a time duration that is an integer-multiple of the basic time unit (denoted as *offset* and *timer* in the above formula, respectively). It is noted that both the offset and the timer have the unit of a time (the unit may be implicit), i.e. both correspond to a time duration.

In general, the UE may also obtains an indication of the reference time. Accordingly the base station may include a corresponding indication in the control signalling indicating the indicated plurality, or signal the reference time via another DCI or RRC message. However, the present invention is not limited thereto as the reference time may be predetermined (e.g. the beginning of the current slot/frame, etc.). Furthermore, for instance, the reference time may be set equal to the reference time t (these reference times may be identical, may depend one each other, may be different, and/or may be independent of each other).

Summarizing, a timer or several timers can be set and/or defined semi-statically (e.g. via RRC) and linked to a SPS/CG/SR configuration to add a negative/positive offset value to the existing time domain allocation value. If multiple timers are set, each timer be related to the same time offset that is to be added after each expiring of said timer, or some or all timers may use the same offset. This timer can be linked to a SPS/CG/SR configuration to adjust the time domain offset of resources. The timer and the additional offset value (which may have a negative or positive value) are used to support the non-integer periodicities regarding radio frame/slot/symbols.

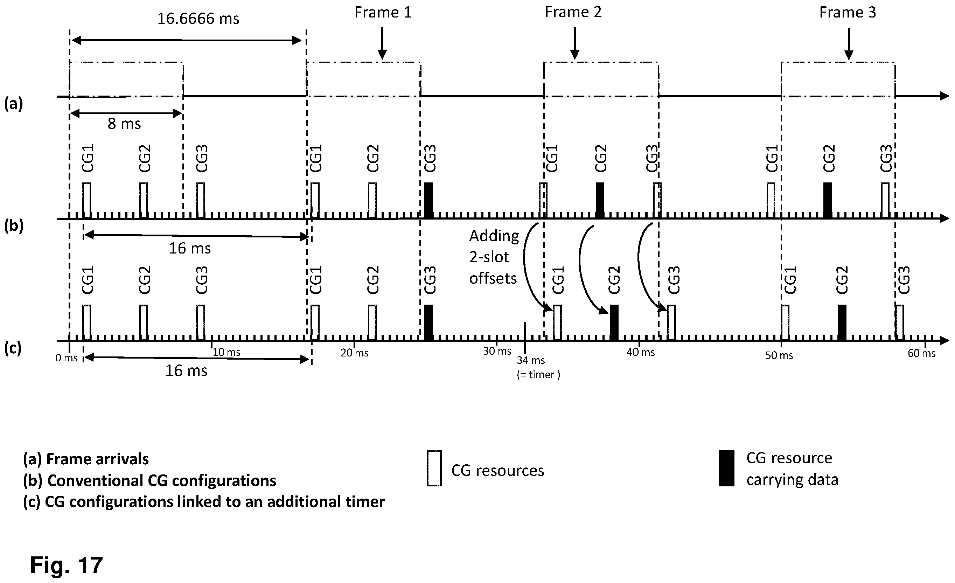

This is illustrated in **Fig. 17,** in which a UE is configured with 3 CG configurations, with the periodicity of 16 ms. More specifically, row (b) of Fig. 17 shows the conventional CG configurations corresponding to the indicated transmission times (e.g. x=16ms for each CG configuration; and t=1ms, 5ms, and 9 ms, respectively for the 3 CG configurations). As shown, the CG resources drift from the jitter window due to the non-integer periodicity of video stream (the video periodicity is 1/60fps≈16.66666 ms). In other words, the indicated transmission times do not well correspond to the periodicity of the traffic. To compensate the drift, a timer is set for the UE and linked to the 3 CG configurations. An offset of 2 slots (equal to 4 ms) is added (positive offset) to the time domain offset of CG configurations after every 32 ms, which yields the adapted transmission times shown in row (c) of Fig. 17. It is noted that the example of Fig. 17, the offset of 2 slots (i.e. 1 ms) together with the timer of 32 ms does not completely compensate the entire drift. To compensate the drift completely, an offset to timer ratio of 1:24 could be used (e.g. adding 1 ms, after every 24 ms).

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

*Further Aspects*

According to a first aspect, a user equipment, UE, is provided that includes a circuitry and a transceiver. The circuitry in operation: (a) obtains, from a control signaling, an indication indicating a plurality of transmission times, (b) obtains an indication of an occurrence frequency of periodic traffic, and (c) determines, based on the control signalling and the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency. The transceiver, in operation: receives the control signaling, and transmits or receives, using one of the transmission opportunities, a transmission of the periodic traffic.

According to a second aspect provided in addition to the first aspect, the basic time unit is predetermined and/or the basic time is a basic time unit of a resource grid employed by the UE, or the circuitry, in operation, obtains, from the control signaling, an indication of the basic time unit.

According to a third aspect provided in addition to the first or second aspect, each two consecutive transmission times of the indicated transmission times are separated by a same time distance that is a non-integer multiple of the basic time unit, and/or the circuitry, in operation, obtains, from the control signalling, as the indication indicating the occurrence frequency, said same time distance.

According to a fourth aspect provided in addition to one of the first to third aspects, the circuitry, in operation, determines, in the determining of the adapted plurality, for each indicated transmission time, a respective adapted transmission time corresponding to said indicated transmission time to be part of the adapted plurality, wherein:

if the indicated transmission time is not separated from a reference time by an integer multiple of the basic time unit, the adapted transmission time is determined to be a time closest after or closest before the indicated transmission time among times separated from the reference time by an integer multiple of the basic time unit, and

otherwise, the adapted transmission time is determined to be the indicated transmission time.

According to a fifth aspect, provided in addition to the fourth aspect, the circuitry, in operation: (a) obtains, from the control signalling, an indication indicating a rule, and (b) determines, based on said rule, in the determining of the adapted plurality, for each indicated transmission time that is not separated from a given reference time by an integer multiple of the basic time unit, whether the corresponding adapted transmission time: (i) is a closest time among times that are separated from the reference time by an integer multiple of the basic time unit, (ii) is a closest time among times before the indicated transmission time that are separated from the reference time by an integer multiple of the basic time unit, or (iii) is a closest time among times after the indicated transmission time that are separated from the reference time by an integer multiple of the basic time unit.

According to a sixth aspect, provided in addition to any one of the first to fourth aspects, the circuitry, in operation, determines, in the determining of the adapted plurality: (a) for each indicated transmission time that is not separated from the given reference time by an integer multiple of the basic time unit, that the corresponding adapted transmission time is a closest time among times before the indicated transmission time that are separated from the reference time by an integer multiple of the basic time unit; (b) for each indicated transmission time that is not separated from the given reference time by an integer multiple of the basic time unit, that the corresponding adapted transmission time is a closest time among times after the indicated transmission time that are separated from the reference time by an integer multiple of the basic time unit; or (c) for each indicated transmission time that is not separated from the given reference time by an integer multiple of the basic time unit, that the corresponding adapted transmission time is a closest time among times that are separated from the reference time by an integer multiple of the basic time unit.

According to a seventh aspect provided in addition to one of the fourth to sixth aspects, the given reference time is a beginning of a frame, subframe, slot, or symbol in which the indicated transmission time or a reception of the control signalling is located; or the given reference time is the beginning of the frame, subframe, slot, or symbol plus a predetermined time offset.

According to an eighth aspect provided in addition to the first or second aspect, each two consecutive transmission times of the indicated transmission times are separated by an integer multiple of the basic time unit; the circuitry, in operation, obtains, as the indication of the occurrence frequency of the periodic traffic, an alternating cycle of valid time periods and invalid time periods; and the circuitry, in operation, determines, in the determining of the adapted plurality, for each indicated transmission time:

if the indicated transmission time overlaps with a valid time period, that the indicated transmission time is part of the adapted plurality of transmission times, and,

if the indicated transmission time does not overlap with a valid time period, that the indicated transmission time is not part of the adapted plurality of transmission times; or

the circuitry, in operation, determines, in the determining of the adapted plurality, for each indicated transmission time:

if the indicated transmission time does not overlap with an invalid time period, that the indicated transmission time is part of the adapted plurality of transmission times, and,

if the indicated transmission time overlaps with an invalid time period, that the indicated transmission time is not part of the adapted plurality of transmission times.

According to a ninth aspect provided in addition to the first or the second aspect, each two consecutive transmission times of the indicated transmission times are separated by an integer-multiple of the basic time unit, and the circuitry, in operation, obtains, as the indication of the occurrence frequency of the periodic traffic: (i) an indication of a positive or negative non-zero offset, and (ii) an indication of a time duration that is an integer-multiple of the basic time unit; the circuitry, in operation, obtains a reference time; and the circuitry, in operation, determines, in the determining of the adapted plurality, for each indicated transmission time, a respective adapted transmission time corresponding to said indicated transmission time to be part of the adapted plurality, wherein: for each indicated transmission time the corresponding adapted transmission time is determined by shifting said indicated transmission time by the offset multiplied by an integer, the integer corresponding to a number the time duration fits into a time interval between the reference time and the indicated transmission time.

According to a tenth aspect provided in addition to any of the first to the eighth aspect, the indication indicating the plurality of transmission times is an indication of a configured grant, CG, configuration, a semi-persistent scheduling, SPS, configuration or a scheduling request, SR, configuration.

According to an eleventh aspect a method is provided for a user equipment, UE, the method including the steps of: receiving control signaling; obtaining, from the control signaling, an indication indicating a plurality of transmission times; obtaining an indication of an occurrence frequency of periodic traffic; determining, based on the control signalling and the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency; and transmitting or receiving, using one of the transmission opportunities, a transmission of the periodic traffic.

According to a twelfth aspect a scheduling device is provided, comprising: a circuitry which, in operation, (i) obtains an indication of an occurrence frequency of periodic traffic, (ii) determines, based on the occurrence frequency of the periodic traffic, an adapted plurality of transmission times corresponding to a plurality of respective transmission opportunities for transmissions of the periodic traffic, wherein: (a) the plurality of adapted transmission times is different from the indicated plurality of transmission times, and (b) the transmission times of the adapted plurality are separated from each other by integer-multiples of a basic time unit, the integer-multiples of the basic time unit corresponding to the occurrence frequency; and (iii) generates a control signaling including an indication indicating a plurality of transmission times, the indicated plurality of transmission times being different from the plurality of adapted transmission times, the control signalling allowing determination of the adapted transmission times based on the occurrence frequency of the periodic traffic; and a transceiver which, in operation: (i) transmits the control signaling, and (ii) transmits or receives, using one of the transmission opportunities, a transmission of the periodic traffic.

According to a thirteenth aspect, a method for a scheduling device, the method including the steps of: obtaining an indication of an occurrence frequency of periodic traffic; determining, based on the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency; and generating a control signaling including an indication indicating a plurality of transmission times, the indicated plurality of transmission times being different from the plurality of adapted transmission times, the control signalling allowing determination of the adapted transmission times based on the occurrence frequency of the periodic traffic; transmitting the control signaling; and transmitting or receiving, using one of the transmission opportunities, a transmission of the periodic traffic.

Further aspects are provided for the method according to the eleventh aspect, corresponding to steps performed in operation by any of the UE of first to tenth aspects or described above. Further aspects are provided for the method according to the thirteenth aspect, corresponding to steps performed in operation by any of the network nodes described above.

According to a fourteenth aspect, a program stored on a (non-transitory) storage medium and including code instructions, which, when executed on one or more processors of a user equipment, cause the one or more processors to execute the steps of any of the above mentioned methods.

According to a fifteenth aspect, an integrated circuit is provided that includes processing circuitry and an interface to a (possibly external) transceiver. The processing circuitry is configured to (by hardware and/or software) (a) obtain, from a control signaling, an indication indicating a plurality of transmission times, (b) obtain an indication of an occurrence frequency of periodic traffic, and (c) determine, based on the control signalling and the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency. The processing circuitry may, over the interface to the transmitter, receive the control signaling, and transmit or receive, using one of the transmission opportunities, a transmission of the periodic traffic.

According to a sixteenth aspect, an integrated circuit is provided that includes processing circuitry and an interface to a (possibly external) transceiver. The processing circuitry is configured to, by hardware and/or software, (i) obtain an indication of an occurrence frequency of periodic traffic, (ii) determine, based on the occurrence frequency of the periodic traffic, an adapted plurality of transmission times corresponding to a plurality of respective transmission opportunities for transmissions of the periodic traffic, wherein: (a) the plurality of adapted transmission times is different from the indicated plurality of transmission times, and (b) the transmission times of the adapted plurality are separated from each other by integer-multiples of a basic time unit, the integer-multiples of the basic time unit corresponding to the occurrence frequency; and (iii) generate a control signaling including an indication indicating a plurality of transmission times, the indicated plurality of transmission times being different from the plurality of adapted transmission times, the control signalling allowing determination of the adapted transmission times based on the occurrence frequency of the periodic traffic. The processing circuitry may, over the interface to the transmitter (i) transmit the control signaling, and (ii) transmit or receive, using one of the transmission opportunities, a transmission of the periodic traffic.

Summarizing, some exemplary embodiments relate to a communication device, a base station and respective methods for a communication device and a base station. For example, the communication device is a user equipment, UE, comprising a circuitry and a transceiver. The circuitry may be configured to (a) obtain, from a control signaling, an indication indicating a plurality of transmission times, (b) obtain an indication of an occurrence frequency of periodic traffic, and (c) determine, based on the control signalling and the occurrence frequency of the periodic traffic, an adapted plurality of transmission times corresponding to a plurality of respective transmission opportunities for transmissions of the periodic traffic, wherein: (i) the plurality of adapted transmission times is different from the indicated plurality of transmission times, and (ii) the transmission times of the adapted plurality are separated from each other by integer-multiples of a basic time unit, the integer-multiples of the basic time unit corresponding to the occurrence frequency. The transceiver may be configured to receive the control signaling, and to transmit or receive, using one of the transmission opportunities, a transmission of the periodic traffic.

**Claims**

1. A user equipment, UE, comprising:

    a circuitry which, in operation:

        - obtains, from a control signaling, an indication indicating a plurality of transmission times,
        - obtains an indication of an occurrence frequency of periodic traffic, and
        - determines, based on the control signalling and the occurrence frequency of the periodic traffic, an adapted plurality of transmission times corresponding to a plurality of respective transmission opportunities for transmissions of the periodic traffic, wherein:

  o the plurality of adapted transmission times is different from the indicated plurality of transmission times, and
  o the transmission times of the adapted plurality are separated from each other by integer-multiples of a basic time unit, the integer-multiples of the basic time unit corresponding to the occurrence frequency; and

a transceiver which, in operation:

  - receives the control signaling, and
  - transmits or receives, using one of the transmission opportunities, a transmission of the periodic traffic.

2. The UE according to claim 1, wherein

the basic time unit is predetermined and/or the basic time is a basic time unit of a resource grid employed by the UE, or
the circuitry, in operation, obtains, from the control signaling, an indication of the basic time unit.

3. The UE according to claim 1 or 2, wherein

each two consecutive transmission times of the indicated transmission times are separated by a same time distance that is a non-integer multiple of the basic time unit, and/or
the circuitry, in operation, obtains, from the control signalling, as the indication indicating the occurrence frequency, said same time distance.

4. The UE according to claims 1 to 3, wherein
the circuitry, in operation, determines, in the determining of the adapted plurality, for each indicated transmission time, a respective adapted transmission time corresponding to said indicated transmission time to be part of the adapted plurality, wherein:

  - if the indicated transmission time is not separated from a reference time by an integer multiple of the basic time unit, the adapted transmission time is determined to be a time closest after or closest before the indicated transmission time among times separated from the reference time by an integer multiple of the basic time unit, and
  - otherwise, the adapted transmission time is determined to be the indicated transmission time.

5. The UE according to claim 4, wherein
the circuitry, in operation:

  - obtains, from the control signalling, an indication indicating a rule, and
  - determines, based on said rule, in the determining of the adapted plurality, for each indicated transmission time that is not separated from a given reference time by an integer multiple of the basic time unit, whether the corresponding adapted transmission time:

    o is a closest time among times that are separated from the reference time by an integer multiple of the basic time unit,
    o is a closest time among times before the indicated transmission time that are separated from the reference time by an integer multiple of the basic time unit, or
    o is a closest time among times after the indicated transmission time that are separated from the reference time by an integer multiple of the basic time unit.

6. The UE according to any of claims 1 to 4, wherein
the circuitry, in operation, determines, in the determining of the adapted plurality:

  - for each indicated transmission time that is not separated from the given reference time by an integer multiple of the basic time unit, that the corresponding adapted transmission time is a closest time among times before the indicated transmission time that are separated from the reference time by an integer multiple of the basic time unit;

- for each indicated transmission time that is not separated from the given reference time by an integer multiple of the basic time unit, that the corresponding adapted transmission time is a closest time among times after the indicated transmission time that are separated from the reference time by an integer multiple of the basic time unit; or
- for each indicated transmission time that is not separated from the given reference time by an integer multiple of the basic time unit, that the corresponding adapted transmission time is a closest time among times that are separated from the reference time by an integer multiple of the basic time unit.

7. The UE according to any of claims 4 to 6, wherein

the given reference time is a beginning of a frame, subframe, slot, or symbol in which the indicated transmission time or a reception of the control signalling is located; or
the given reference time is the beginning of the frame, subframe, slot, or symbol plus a predetermined time offset.

8. The UE according to claim 1 or 2, wherein

each two consecutive transmission times of the indicated transmission times are separated by an integer multiple of the basic time unit;
the circuitry, in operation, obtains, as the indication of the occurrence frequency of the periodic traffic, an alternating cycle of valid time periods and invalid time periods; and
the circuitry, in operation, determines, in the determining of the adapted plurality, for each indicated transmission time:

- if the indicated transmission time overlaps with a valid time period, that the indicated transmission time is part of the adapted plurality of transmission times, and,
- if the indicated transmission time does not overlap with a valid time period, that the indicated transmission time is not part of the adapted plurality of transmission times; or

the circuitry, in operation, determines, in the determining of the adapted plurality, for each indicated transmission time:

- if the indicated transmission time does not overlap with an invalid time period, that the indicated transmission time is part of the adapted plurality of transmission times, and,
- if the indicated transmission time overlaps with an invalid time period, that the indicated transmission time is not part of the adapted plurality of transmission times.

9. The UE according to claim 1 or 2, wherein

each two consecutive transmission times of the indicated transmission times are separated by an integer-multiple of the basic time unit, and
the circuitry, in operation, obtains, as the indication of the occurrence frequency of the periodic traffic:

- an indication of a positive or negative non-zero offset, and
- an indication of a time duration that is an integer-multiple of the basic time unit;

the circuitry, in operation, obtains a reference time; and
the circuitry, in operation, determines, in the determining of the adapted plurality, for each indicated transmission time, a respective adapted transmission time corresponding to said indicated transmission time to be part of the adapted plurality, wherein:
for each indicated transmission time the corresponding adapted transmission time is determined by shifting said indicated transmission time by the offset multiplied by an integer, the integer corresponding to a number the time duration fits into a time interval between the reference time and the indicated transmission time.

10. The UE according to any of claims 1 to 8, wherein
the indication indicating the plurality of transmission times is an indication of a configured grant, CG, configuration, a semi-persistent scheduling, SPS, configuration or a scheduling request, SR, configuration.

11. A method for a user equipment, UE, the method including the steps of:

receiving control signaling;

obtaining, from the control signaling, an indication indicating a plurality of transmission times;

obtaining an indication of an occurrence frequency of periodic traffic;

determining, based on the control signalling and the occurrence frequency of the periodic traffic, an adapted plurality of transmission times corresponding to a plurality of respective transmission opportunities for transmissions of the periodic traffic, wherein:

- the plurality of adapted transmission times is different from the indicated plurality of transmission times, and
- the transmission times of the adapted plurality are separated from each other by integer-multiples of a basic time unit, the integer-multiples of the basic time unit corresponding to the occurrence frequency; and

transmitting or receiving, using one of the transmission opportunities, a transmission of the periodic traffic.

12. A scheduling device, comprising:

a circuitry which, in operation,

- obtains an indication of an occurrence frequency of periodic traffic,
- determines, based on the occurrence frequency of the periodic traffic, an adapted plurality of transmission times corresponding to a plurality of respective transmission opportunities for transmissions of the periodic traffic, wherein:

o the plurality of adapted transmission times is different from the indicated plurality of transmission times, and
o the transmission times of the adapted plurality are separated from each other by integer-multiples of a basic time unit, the integer-multiples of the basic time unit corresponding to the occurrence frequency; and

- generates a control signaling including an indication indicating a plurality of transmission times, the indicated plurality of transmission times being different from the plurality of adapted transmission times, the control signalling allowing determination of the adapted transmission times based on the occurrence frequency of the periodic traffic; and

a transceiver which, in operation:

- transmits the control signaling, and
- transmits or receives, using one of the transmission opportunities, a transmission of the periodic traffic.

13. A method for a scheduling device, the method including the steps of:

obtaining an indication of an occurrence frequency of periodic traffic;

determining, based on the occurrence frequency of the periodic traffic, an adapted plurality of transmission times corresponding to a plurality of respective transmission opportunities for transmissions of the periodic traffic, wherein:

- the plurality of adapted transmission times is different from the indicated plurality of transmission times, and
- the transmission times of the adapted plurality are separated from each other by integer-multiples of a basic time unit, the integer-multiples of the basic time unit corresponding to the occurrence frequency; and

generating a control signaling including an indication indicating a plurality of transmission times, the indicated plurality of transmission times being different from the plurality of adapted transmission times, the control signalling allowing determination of the adapted transmission times based on the occurrence frequency of the periodic traffic;

transmitting the control signaling; and

transmitting or receiving, using one of the transmission opportunities, a transmission of the periodic traffic.

**Fig. 1**

**Fig. 2**

**Fig. 3**

**Enhanced Mobile Broadband**

Gigabytes in a second

3D vide, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

## Fig. 4

NSSF    NEF    NRF    PCF    UDM    AF

Nnssf    Nnef    Nnrf    Npcf    Nudm    Naf

Nausf    Namf    Nsmf

AUSF    AMF    SMF

N1    N2    N4

UE    (R)AN    N3    UPF    N6    DN

N9

## Fig. 5

Fig. 6

Fig. 7

Fig. 8

SR uplink resource

SR uplink resource carrying SR

Dynamic uplink resource carrying frame

Fig. 9

Fig. 10

# Fig. 11

## 1100

| User Equipment 1110 | | Scheduling Device 1160 |
|---|---|---|
| Transceiver 1120 | ←→ | Transceiver 1170 |
| ↕ | | ↕ |
| circuitry 1130 | | circuitry 1180 |
| transmission opportunity determination circuitry 1135 | | scheduling circuitry 1185 |

channel 1150

1135

| control signalling processing circuitry 1210 |
|---|
| occurrence frequency obtaining circuitry 1220 |
| transmission times determination circuitry 1230 |

**Fig. 12**

1185

| occurrence frequency obtaining circuitry 1310 |
|---|
| transmission times determination circuitry 1320 |
| control signalling generating circuitry 1330 |

**Fig. 13**

## Fig. 14

S1400: obtaining indication of the occurrence frequency of periodic traffic

S1440: receive control signalling

S1410: determine adapted transmission times of transmission opportunities

S1450: obtain indication of transmission times

S1420: generate signalling indicating transmission times

S1460: obtain indication of the occurrence frequency of periodic traffic

S1430: transmits the control signalling

S1470: determine adapted transmission times of transmission opportunities

S1490: transmit/receive the periodic traffic using a transmission opportunity

S1480: transmit/receive the periodic traffic using a transmission opportunity

UE

Channel

BS

**(a) Frame arrivals**
**(b) CG configurations**

☐ CG resources

■ CG resource carrying data

**Fig. 15**

EP 4 271 087 A1

(a) Frame arrivals
(b) Virtual enable/disable cycle
(c) CG configurations

☐ Active CG resources   ▨ Released CG resources   ■ CG resource carrying data

## Fig. 16

(a) Frame arrivals
(b) Conventional CG configurations
(c) CG configurations linked to an additional timer

☐ CG resources

■ CG resource carrying data

**Fig. 17**

EP 4 271 087 A1

Europäisches
Patentamt

European
Patent Office

Office européen
des brevets

## EUROPEAN SEARCH REPORT

**Application Number**

EP 22 16 9833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/155149 A1 (LENOVO BEIJING LTD [CN]) 6 August 2020 (2020-08-06) <br> * figures 1-10 * <br> * paragraph [0136] – paragraph [0199] * <br> * claims 1-72 * <br> ----- | 1-13 | INV. <br> H04W72/04 <br><br> ADD. <br> H04L5/00 <br> H04W24/10 |
| X | US 2021/367742 A1 (MARCO OLIVIER [FR]) 25 November 2021 (2021-11-25) <br> * figures 1-15 * <br> * paragraph [0001] * <br> * paragraph [0022] – paragraph [0110] * <br> * claims 1-21 * <br> ----- | 1,2, 11-13 | H04W52/02 <br> H04W72/12 <br> H04W74/08 <br> H04L47/28 <br> H04W72/08 |
| X | US 2021/105812 A1 (RASTEGARDOOST NAZANIN [US] ET AL) 8 April 2021 (2021-04-08) <br> * figures 1-27 * <br> * paragraph [0099] – paragraph [0109] * <br> * paragraph [0116] – paragraph [0126] * <br> * paragraph [0137] – paragraph [0141] * <br> * paragraph [0146] – paragraph [0147] * <br> * paragraph [0155] – paragraph [0162] * <br> * paragraph [0170] – paragraph [0173] * <br> * paragraph [0176] * <br> * paragraph [0184] – paragraph [0200] * <br> * paragraph [0214] – paragraph [0215] * <br> * paragraph [0224] – paragraph [0380] * <br> * paragraph [0387] – paragraph [0438] * <br> * claims 1-20 * <br> ----- | 1,2, 11-13 | |

**TECHNICAL FIELDS SEARCHED (IPC)**

H04W
H04L
H04B

The present search report has been drawn up for all claims

| Place of search | Date of completion of the search | Examiner |
|---|---|---|
| The Hague | 21 September 2022 | Tseliou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 9833

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2022

| Patent document cited in search report | | Publication date | Patent family member(s) | | Publication date |
|---|---|---|---|---|---|
| WO 2020155149 | A1 | 06-08-2020 | NONE | | |
| US 2021367742 | A1 | 25-11-2021 | CN | 112166638 A | 01-01-2021 |
| | | | EP | 3741173 A1 | 25-11-2020 |
| | | | US | 2021367742 A1 | 25-11-2021 |
| | | | WO | 2020164501 A1 | 20-08-2020 |
| US 2021105812 | A1 | 08-04-2021 | NONE | | |

EPO FORM P0459

For more details about this annex : see Official Journal of the European Patent Office, No. 12/82